(19)

**Europäisches Patentamt**
**European Patent Office**
**Office européen des brevets**

(11) **EP 4 570 490 A1**

(12) **EUROPEAN PATENT APPLICATION**

(43) Date of publication:
**18.06.2025 Bulletin 2025/25**

(21) Application number: **23216822.9**

(22) Date of filing: **14.12.2023**

(51) International Patent Classification (IPC):
**B32B 7/022** (2019.01)   **B32B 9/04** (2006.01)
**B32B 13/04** (2006.01)   **B32B 13/12** (2006.01)
**B32B 17/10** (2006.01)   **B32B 25/20** (2006.01)
**B32B 27/28** (2006.01)   **F16F 9/30** (2006.01)

(52) Cooperative Patent Classification (CPC):
**B32B 27/283; B32B 7/022; B32B 9/043;**
**B32B 9/045; B32B 13/042; B32B 13/12;**
**B32B 17/10; B32B 25/20; F16F 9/306;**
B32B 2250/42; B32B 2307/546; B32B 2307/56;
B32B 2307/732; B32B 2457/00

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **ETH Zurich**
**8092 Zurich (CH)**

(72) Inventors:
• **GUSEV, Andrei**
  **8047 Zürich (CH)**
• **CASERI, Walter**
  **8049 Zürich (CH)**
• **TSIMOURI, Ioanna**
  **8048 Zürich (CH)**

(54) **STIFF AND DAMPING COMPOSITE STRUCTURES WITH THIN INTERLAYERS**

(57)     A composite structure (1) for a damping structure (100) comprises at least one first layer (2), and at least one second layer (3) preferably comprising at least a first component (4) and optionally at least a second component (5). The first layer (2) and the second layer (3) are arranged above one another with respect to a thickness direction (D) of the composite structure (1). A thickness ratio h1/h2 between a thickness (h1) of the first layer (2) and a thickness (h2) of the second layer (3) along the thickness direction (D) is above 50, preferably above 100. The composite structure (1) has a loss flexural modulus E" above 1 GPa when measured at a temperature in the range of -50 °C to 100 °C and at a frequency in the range of 0.007 Hz to 10 Hz. The composite structure (1) has a product $\tan\delta \cdot (E'/\rho)^{1/2}$ above 50 $(Pa/kg/m^3)^{1/2}$ at said temperature and at said frequency.

FIG. 4a

EP 4 570 490 A1

**Description**

TECHNICAL FIELD

The present invention relates to a composite structure as claimed in claim 1, to a damping structure comprising or consisting of such a composite structure as claimed in claim 8, and to a method of producing a composite structure as claimed in claim 9.

PRIOR ART

Because of their low damping capacity, stiff structural materials are often susceptible to vibrations stemming from dynamic loading conditions. Not only can the presence of mechanical vibrations pose a threat to the structural integrity, but it can also generate loud and uncomfortable noise which may be harmful to human health and wellbeing [1-4]. Even though active treatments have been successfully employed to mitigate mechanical vibrations, they usually require an energy input and burden the structure with additional mass [5,6]. Therefore, passive strategies have drawn the attention over the last two decades [3,4,6-13]. The inherent ability of a material to passively damp mechanical vibrations is of key importance; it may prolong the service life and enhance the stability of the structure, prevent its catastrophic failure, and reduce noise emission without any active external intervention.

Apart from safety, comfort and health aspects, there are many appealing applications of stiff materials with high inherent damping capability where an active treatment is difficult or not feasible. For example, high quality sound reproduction requires a loudspeaker system to perform with sufficient fidelity. This entails a very flat frequency response with wide bandwidth and good control of resonances, for which a well-designed diaphragm is of paramount importance [14,15]. In terms of materials, a high performance loudspeaker should incorporate a lightweight diaphragm stiff enough to shift resonances towards higher frequencies, and with high internal losses to control self-resonances [15,16]. In a comparable manner, the cantilever beam of a high-resolution high-speed imaging equipment, such as the atomic force microscopy (AFM), should simultaneously be very stiff and lightweight to have a high fundamental frequency, and also highly lossy to be able to quickly respond to the different topographical obstacles upon imaging [10,17].

By nature, however, materials that are simultaneously stiff and lossy are rare.

SUMMARY OF THE INVENTION

It is an object of the present invention to provide a composite structure for a damping structure that simultaneously exhibits enhanced stiffness and damping capabilities.

This object is achieved with a composite structure according to claim 1. In particular, a composite structure for a damping structure is provided, wherein the composite structure comprises at least one first layer, and at least one second layer preferably comprising at least a first component and optionally at least a second component. The first layer and the second layer are arranged above one another with respect to a thickness direction of the composite structure. A thickness ratio $h1/h2$ between a thickness $h1$ of the first layer and a thickness $h2$ of the second layer along the thickness direction is above 50, preferably above 100. The composite structure has a loss flexural modulus E" above 1 GPa when measured at a temperature in the range of -50 °C to 100 °C and at a frequency in the range of 0.007 Hz to 10 Hz, and the composite structure has a product $\tan\delta \cdot (E'/\rho)^{1/2}$ above 50 $(Pa/kg/m^3)^{1/2}$ at said temperature and at said frequency. E' is the storage flexural modulus of the composite structure measured at said temperature and at said frequency, and $\tan\delta = E''/E'$ is the loss factor of the composite structure, and wherein $\rho$ is the density of the composite structure.

That is, the composite structure has a loss flexural modulus E" being above 1 GPa, and a product $\tan\delta \cdot (E'/\rho)^{1/2}$ being above 50 $(Pa/kg/m^3)^{1/2}$, wherein these characteristics remain as such, i.e. above the specified values, in a temperature range of -50 °C to 100 °C and in a frequency range of 0.007 Hz to 10 Hz. In other words, the composite structure according to the invention exhibits a high loss flexural modulus E" and a high product $\tan\delta \cdot (E'/\rho)^{1/2}$ over a broad temperature range and frequency range.

Unless stated otherwise, the instrument being used for measuring the characteristics of the composite structures such as the loss flexural modulus E", the storage flexural modulus E' and the loss factor $\tan\delta$ was a TA Instrument Discovery DMA 850, a commercially available temperature-controlled transducer that performs a dynamic mechanical analysis (DMA) using a three-point bending test.

Furthermore, unless stated otherwise, the characteristics of the composite structure such as the loss flexural modulus E", the storage flexural modulus E' and the loss factor $\tan\delta$ are determined according to the ASTM D790 standard test method utilizing a three-point loading system as it is well-known in the art. An applied oscillatory strain of 0.01% was used, and both the oscillatory strain and the prestrain are preferably chosen such that the measurements are in the linear regime. In fact, to perform the measurements, first the prestrain has to be applied to the sample to hold it for the oscillatory displacements, which needs to be higher than the applied strain. The applied strain is then applied in addition. The linear regime is understood as an overall deformation being small enough so that the measured modulus does not depend on the strain.

Regarding the terminology it is noted that for purely elastic isotropic materials the storage flexural modulus E' is equivalent to or typically designated as the Young's (tensile) modulus, E. In general, when a material is viscoelastic, then $E'{\approx}E$ and the loss flexural modulus, E", is infinitesimal when measured at very low frequencies. The Young's modulus E can be measured in this case with Instron Extra Model 5564. The measurements are such that the test remains in the linear regime.

The storage flexural modulus E', the loss flexural modulus E" and the loss factor $\tan\delta$ of the composite structure was measured at a temperature in the range of -50 °C to 100 °C, for instance at a temperature of 20 °C, and at a frequency in the range of 0.007 Hz to 10 Hz, for instance at 1 Hz. The temperature and frequency were set by the instrument.

The composite structure preferably has a loss flexural modulus E" above 1 GPa, such as 3 GPa when measured at a temperature in the range of -50 °C to 100 °C, and at a frequency in the range of 0.007 Hz to 10 Hz. The temperature and the frequency are set and measured by the instrument used for the measurements. For instance, the composite structure has a loss modulus E" of 8 GPa or more when measured at a temperature below 20 °C and at a frequency above 1 Hz.

Additionally or alternatively, the composite structure preferably has a loss flexural modulus E" in the range of 1 to 100 GPa, more preferably in the range of 3 to 100 GPa, and particularly preferably in the range of 3 to 20 GPa when measured at a temperature in the range of -50 °C to 100 °C, for instance at a temperature of 20 °C, and at a frequency in the range of 0.007 Hz to 10 Hz, for instance at 1 Hz.

The composite structure preferably has a product $\tan\delta$ $(E'/\rho)^{1/2}$ above 50 $(Pa/kg/m^3)^{1/2}$, such as above 100 $(Pa/kg/m^3)^{1/2}$, for instance above 200 $(Pa/kg/m^3)^{1/2}$ such as 500 $(Pa/kg/m^3)^{1/2}$ at a temperature in the range of -50 °C to 100 °C, and at a frequency in the range of 0.007 Hz to 10 Hz. For instance, the composite structure has a product $\tan\delta$ $(E'/\rho)^{1/2}$ above 600 at a temperature below 20 °C and at a frequency above 1 Hz.

Additionally or alternatively, the composite structure preferably has a product $\tan\delta$ $(E'/\rho)^{1/2}$ in the range of 50 to 100000 $(Pa/kg/m^3)^{1/2}$, such as in the range of 100 to 100000 $(Pa/kg/m^3)^{1/2}$, for instance in the range of 200 to 2000 $(Pa/kg/m^3)^{1/2}$ at a temperature in the range of -50 °C to 100 °C, for instance at a temperature of 20 °C, and at a frequency in the range of 0.007 Hz to 10 Hz, for instance at 1 Hz.

The composite structure preferably has a ratio h1/h2 of above 50 and more preferably of above 100 and even more preferably above 150.

The thickness h1 of the first layer and the thickness h2 of the second layer as well as an overall thickness of the composite structure can be measured by microscopy, a metric ruler or a caliper as they are known in the art. In fact, the thickness is preferably determined according to a method that allows to determine thicknesses of sections at the involved layers with an accuracy of 10% or less. To this end it is particularly preferred to determine the thicknesses of the first layer and the second layer by measuring the cross sections of these layers with an optical microscope or with an electron microscope. For example, the thicknesses of the first and second layers can be measured at 10 locations that are equally spaced along a transverse direction extending perpendicularly to the thickness direction.

A thickness of the first layer along the thickness direction of the composite structure preferably is in the millimeter range or in the submillimeter range.

A thickness of the second layer along the thickness direction of the composite structure preferably is in the micrometer range or the nanometer range.

The thickness of the first and second layers and thus an overall thickness of the composite structure along the thickness direction of the composite structure can vary among the various applications of the composite structure. For example, an application of the composite structure that requires a beam- or strip-like composite structure with, for instance, a length of 50 mm when seen along the transverse direction, a total thickness of 0.6 mm and being a five-layered structure having three first layers and two second layers, could comprise first layers having in each case a thickness of h1 = 0.2 mm and second layers having in each case a thickness of h2 being in the 100 nm scale if the material of the first layers has a storage flexural modulus E' = 165 GPa and the material of the second layers has a shear modulus G' in the range of 15 kPa to 28 kPa and a loss factor $\tan\delta$ in the range of 0.05 to 0.25 when measured at frequencies in the range of f = 0.005 Hz to 100 Hz and at a temperature of 20 °C. Regarding the terminology it is noted that for elastomers one commonly uses E' = 3G' and E" = 3G" so the loss factors of E and G are proportionally related.

If for example, the length of the composite structure is to be increased e.g. twice, then the thickness of the second layers h2 could be $2^2$ = 4 times larger, so it could be in the $\mu$m scale. The composite structure for example could be 1 m long when seen along the transverse direction and 3 mm thick when seen along the thickness direction. Then, the thickness of the second layers h2 can be again in the $\mu$m scale. However, it is likewise conceivable that that the thickness of the composite structure is to be increased e.g., twice, wherein the thicknesses of the second layer h2 are twice smaller and thus in the nm scale depending on the length of the composite structure along the transverse direction.

Apart from the dimensions, the properties of the constituent materials can also play a role. If for example, the material of the first layer(s) is twice stiffer e.g. having a storage modulus E' = 330 GPa, then the thickness of the second layer(s) h2 could be twice smaller, in which case it is also in the nm scale.

If for example, the material of the second layer is twice stiffer and has, for example, a shear modulus G' in the range of 30 kPa to 56 kPa, then the thickness of the second layer(s) h2 could be twice larger, wherein it is in the nm scale.

That is to say, the thickness scales of the first and second layers are preferably chosen in accordance with the application in hand.

For many applications, the thickness of the second layer(s) h2 preferably is in the nm or $\mu$m scale, that is, in the range of $10^{-9}$ m to $10^{-6}$ m.

The composite structure preferably has a density $\rho$ being smaller than 10 g/cm³, for instance smaller than 5 g/cm³. The density of the composite structure can be determined according to Archimedes or from the ratio of their mass and volume, wherein the mass of the composite structure can be measured in a Laboratory Balance and the volume of the composite structure can be determined from its dimensions measured with a ruler or a dial indicator, or a digital calliper, or a tape measure, for instance.

The first layer preferably is a stiff layer and/or has a storage flexural modulus E' being above 10 GPa, preferably above 50 GPa and particularly preferably above 100 GPa when measured at a temperature in the range of -50 °C to 100 °C, for instance at a temperature of 20 °C, and at a frequency in the range of 0.007 Hz to 10 Hz, for instance at a frequency of 1 Hz.

A ratio of the storage flexural moduli between E' of the first layer and E' of the second layer preferably is above 5'000, more preferably above 10'000.

The second layer preferably is a soft layer and/or has, in its bulk form, at least one of:

- a shear modulus G' being below 1 MPa such as 0.1 MPa or below, for instance 0.01 MPa or below when measured at a temperature in the range of -20 °C to 50 °C, such as at a temperature in the range of -10 °C to 30 °C, for instance at 20 °C, and at a frequency in the range of 0.005 Hz to 100 Hz, for instance in the range of 0.01 Hz to 2 Hz, such as 1 Hz, and/or
- a loss factor tan$\delta$ being in a range between 0.01 and 1 when measured at a temperature in the range of -20 °C to 50 °C, preferably at a temperature in the range of -10 °C to 30 °C, for instance at 20 °C, and at a frequency in the range of 0.005 Hz to 100 Hz, for instance in the range of 0.01 Hz to 2 Hz, such as 1 Hz.

The loss factor tan$\delta$ as well as a shear modulus G' of the second layer can be measured by a torsion or compression test, for instance using a Rheometrics RSA II analyzer or Discovery DMA850 and preferably at a temperature in the range of -50°C to 100°C, for instance at a temperature of 20 °C, and at a frequency in the range of 0.007 Hz to 10 Hz, for instance at 1 Hz, or in a frequency sweep in said temperature ranges or at said temperature and/or in a temperature sweep in said frequency ranges or at said temperature.

The "bulk form" can be considered, generally speaking, as any combination of dimensions or volume of the second layer that allows one to make measurements on the second layer. For instance, when the second layer is confined because it is too thin measurements cannot be taken. The same applies when the second layer forms part of the composite structure and is, for instance, sandwiched between first layers.

The second layer preferably has a strain at break being above 10%.

Additionally or alternatively, the second layer preferably comprises or consists of a nearly incompressible material. Additionally or alternatively, the second layer preferably has a Poisson's ratio being larger than 0.4.

The first layer preferably comprises or consists of at least one of glass, ceramics, concrete, at least one metal compound, at least one metalloid compound, at least one alloy compound, at least one composite, and mixtures thereof.

That is, the first layer can comprise or consist of various components. For example, the first layer can comprise or consist of at least one glass, such as a silicate-containing glass, e.g. silicate glass or borosilicate glass such as gorilla glass or tempered glass. Additionally or alternatively, the first layer can comprise or consist of at least one ceramics such as barium titanate, alumina, or zirconia. Additionally or alternatively, the first layer can comprise or consist of at least one metal compound, such as titanium, aluminium, iron, or copper. Additionally or alternatively, the first layer can comprise or consist of at least one metalloid compound, such as silicon or silicon carbide. Additionally or alternatively, the first layer can comprise or consist of at least one alloy compound, such as an aluminium alloy or an iron alloy, for instance steel, or a titanium alloy. Additionally or alternatively, the first layer can comprise or consist of at least one composite, for example a fiber-reinforced composite such as fiberglass/epoxy composites, fiberglass/polyester composites, carbon/polymer composites, and carbon/epoxy composites, or concrete.

The first layer preferably comprises or consists of at least one material having a density being below 10000 kg/m³.

The second layer preferably is viscoelastic and/or comprises or consists of:

- at least one elastomer, and/or
- at least one component having a glass-transition temperature being below an operation temperature and/or being below 23 °C, preferably below 0 °C and more preferably below -25 °C, and/or
- at least one of a cross-linkable or cross-linked component, and/or

- at least one polymer, preferably a brush-polymer and more preferably a comb-like polymer network.

The second layer preferably comprises or consists of at least one elastomer, for example at least one silicone polymer such as polydimethylsiloxane (PDMS) or other silicones, elastomers based on polyurethanes or polyureas, natural rubbers, vulcanized rubbers, or thermoplastic elastomers. Additionally or alternatively, the second layer preferably is viscoelastic. Additionally or alternatively, the second layer preferably has a shear modulus G' being below 1 MPa when measured at a temperature of 20 °C and at a frequency in the range of 0.005 Hz to 100 Hz. Additionally or alternatively, the second layer preferably has a loss factor tan$\delta$ being in a range between 0.01 and 1 when measured at a temperature of 20 °C and at a frequency in the range of 0.005 Hz to 100 Hz. Additionally or alternatively, the second layer preferably comprises or consists of at least one component having a glass-transition temperature being below an operation temperature and/or being below 23 °C, preferably below 0 °C and more preferably below -25 °C, for example about -40 °C, or below -100 °C, for example about -120 °C. Additionally or alternatively, the second layer preferably comprises or consists of at least one cross-linkable or cross-linked component such as a cross-linkable or cross-linked polymer. Additionally or alternatively, the second layer preferably comprises or consists of at least one brush-polymer and/or a comb-like polymer network. That is, the second layer can comprise or consist of a network of comb-like polymer chains. The brush-polymer is preferably understood as a polymer comprising a long backbone chain and shorter side chains that are separated by each other by at least 6 monomeric units of the backbone chains. The long chains can be either of the same or a different polymer. The comb-like polymer network is preferably formed from brush-polymers being cross-linked with cross-linking polymers, the cross-linking polymers can comprise short or long chains. To this end it is conceivable to either make first the brush-polymer (backbones and side chains) and then add the cross-linking polymers or mix all three polymer components together simultaneously like.

Various brush-polymers and/or cross-linking polymers are conceivable and well-known to the skilled person, such as organic polymers, for instance an acrylate polymer such as poly(butyl acrylate) (PBA), or a silicone polymer, for instance polydimethylsiloxane (PDMS).

A preferred second layer comprises or consists of comb-like polydimethylsiloxane (PDMS) that comprises, for instance, PDMS-based backbone chains, PDMS-based side chains and PDMS-based cross-linking chains.

In any case it is preferred that the first layer and the second layer are of a different material and/or are chemically different from one another, meaning different material classes like metals, ceramics, polymers etc.

The composite structure preferably comprises two or more first layers and/or two or more second layers that are alternatingly arranged with respect to the thickness direction of the composite structure.

The composite structure preferably comprises one or more first layers and one or more second layers being alternatingly stacked above one another with respect to the thickness direction of the composite structure.

It is preferred that a number of the second layers is smaller than a number of the first layers. In fact, the second layers are preferably in number one less than the first layers.

It is preferred that the first layer(s) provide an outermost layer of the composite structure. Additionally or alternatively, it is preferred that in a middle region of the composite structure, that is H/2, where H is the thickness of the whole composite structure, there is a first layer, in fact a stiff layer as mentioned earlier.

It should be noted that the composite structure can consist of only two layers, one first layer and one second layer. For example, the composite structure could be a coated substrate consisting of a substrate in the form of one first layer and a coating in the form of one second layer or vice versa.

A thickness of the first layers can be the same or different from one another when seen along the thickness direction of the composite structure. In the case of different thicknesses, it is preferred that a ratio between the thicknesses of the first layers is in the range of 1 to 5. Additionally or alternatively, a thickness of the second layers can be the same of different from one another when seen along the thickness direction of the composite structure

In another aspect, a damping structure comprising or consisting of at least one composite structure as described above is provided.

The damping structure preferably comprises at least one second layer being arranged between two first layers with respect to a thickness direction of the damping structure. In fact, the damping structure preferably comprises two or more first layers and one or more second layers that are alternatingly arranged with respect to the thickness direction of the damping structure. The thickness direction of the damping structure preferably runs parallel to the thickness direction of the composite structure. That is, the composite structure can preferably be part of or provide a damping structure. Said damping structure preferably serves the purpose of vibration damping or noise attenuation.

In another aspect a method of producing a composite structure, preferably as described above, is provided. The method comprises the step of depositing at least one first component on at least one first layer, whereby a second layer comprising the at least one first component is formed on the first layer.

Any statements made herein with regard to the composite structure per se preferably likewise apply to the method of producing the composite structure and vice versa.

The first component preferably is at least one cross-linkable component such as a cross-linkable polymer as mentioned earlier.

Prior to the deposition of the at least one first component on the first layer, at least one second component is preferably deposited on the first layer, and wherein the at least one first component is added to the second component being deposited on the first layer, whereby the second layer comprising the first component and the second component is formed.

That is, by adding the first component to the second component being deposited on the first layer, a second layer comprising or consisting of the first component and the second component is formed.

The second component preferably is a catalyst or a catalyst precursor, for instance a metal-based catalyst such as a metal-complex catalyst. The catalyst is preferably chosen according to the constituents of the second layer. For example, in the event of the second layer being a silicone polymer containing polymer component with Si-H and vinyl groups, the catalyst preferably is a hydrosilation catalyst. For instance, in the case of a cross-linking reaction by hydrosilation the catalyst can be a platinum-based catalyst such as a platinum-complex catalyst, e.g. cis-[PtCl$_2$(styrene)$_2$] or Speier's catalyst or Karstedt's catalyst. The catalyst is preferably configured to diffuse into the cross-linkable component. The catalyst is preferably non-evaporable. The second layer is preferably formed from the cross-linkable component being cross-linked with the aid of the catalyst.

However, it should be noted that the second component is not always needed. For instance, in the event of the first component being curable such as in UV-curable or when thermoplastic elastomers are used. In this case, only at least one first component, in particular polymer components being mixed together can be deposited on the first layer, and wherein a cross-linking is achieved by UV-exposure, whereby the second layer is formed.

Statements made herein regarding the at least one first component preferably apply to the case where no second component is present as well as to the case where a second component is present.

If present, a concentration of the catalyst in the catalyst solution or catalyst precursor solution preferably depends on the targeted thickness of the second layer. For example, an amount of the catalyst could correspond to 30 ppm to 120 ppm with respect to an amount of the at least one first component.

The first component is preferably added to the first layer, preferably to the second component already deposited on the first layer if present, in a solution comprising the first component and at least one solvent. Said solvent is removed after the solution has been added to the first layer. Alternatively, the first component is added to the first layer, preferably to the second component being deposited on the first layer if present, in a melt state.

It is conceivable that the first component such as the cross-linkable compound is added to the first layer, for instance to the first layer comprising the deposited second component such as the catalyst, in solution. Said solution preferably comprises at least one solvent and the first component. Various solvents are conceivable, such organic solvents and/or hydrocarbon-based solvents, for instance hexane, toluene or chlorinated hydrocarbons, see also above. After said solution is added to the first layer, it is preferred that the solvent is removed such as by evaporation. Said solvent removal can again take place at room temperature, for example by simply allowing the solvent to evaporate. However, it is likewise conceivable that the removal of the solvent is assisted, for example by heating the first layer and/or by applying vacuum.

A mass fraction of the first component in the solvent preferably depends on the targeted thickness of the second layer. It can be calculated based on a surface area desired to be covered by the first compound, a targeted thickness of the second layer and the density of the first compound.

However, instead of adding the first component to the first layer, for instance to the second component being deposited on the first layer, in solution it is likewise conceivable to provide the first component in its melt state. The melt state of the first component is understood as the first component not being in a solvent-borne form. The melt state of the first component is preferably formed by the first component in its liquid form or by preparing a mixture comprising more than one first component (e.g., polymer components).

In any case a removal such as an evaporation of the solvents takes place, resulting in a composite structure that is solvent-free.

The second component is preferably deposited on the first layer by i) adding a precursor solution comprising the second component and at least one solvent to the first layer, and ii) removing the solvent, whereby the second component is deposited on the first layer.

The precursor solution preferably comprises or consists of the at least one second component being provided, preferably dissolved or dispersed, in at least one solvent. Various solvents are conceivable and preferably depend on the type of layer being manufactured. For example, the solvent can be an organic solvent such as a hydrocarbon-based solvent, for example toluene or hexane. The solvent being used preferably depends on the type of layer being manufactured. For instance, an organic solvent such as a hydrocarbon-based solvent, for instance hexane, can be used. Other solvents are however likewise conceivable such as for instance polar solvents for compounds like polyurethane in the event that the first compound is well soluble in polar solvents, etc.

After the precursor solution is added to the first layer, the solvent of the precursor solution is preferably removed, for instance evaporated. Said solvent removal can take place at room temperature, for example by simply allowing the solvent to evaporate. However, it is likewise conceivable that the removal is assisted, for example by heating the first layer and/or by vacuum.

Whereas the solvent of the precursor solution is removable such as by evaporation, the second component such as the catalyst is preferably non-evaporable and remains on the first layer, i.e. the second component such as the catalyst is deposited on the first layer.

The first component, prior to being added to the second component being deposited on the first layer, is preferably added to at least one further first layer, and wherein the first layer and the further first layer are arranged above one another such that the first component is arranged between the first layer and the further first layer with respect to the thickness direction of the composite structure, allowing the first component and the second component to intermix.

It is conceivable to provide the first component such as a cross-linkable compound and the second component such as a catalyst separate from one another. That is, it is preferred to prepare one or more first layers comprising the deposited second component such as the catalyst and to prepare one or more first layers comprising the first component such as the cross-linkable compound, in particular in its melt state. Thereafter, it is preferred to arrange, in particular stack, said first layers above one another with respect to the thickness direction of the composite structure such that the second component such as the catalyst deposited on one of the first layers is contacting the first component such as the curable compound provided on one of the further first layers, allowing them to intermix and to form the second layer, in particular by cross-linking, i.e. curing.

In the event that the composite structure shall comprise more than two first layers being arranged above one another and/or in the event that more than one first layer comprising the second component shall be provided, it is preferred to add the at least one first component also on a backside of the first layer, i.e. on a side being opposite to the side that already comprises the first component. For example, a first layer comprising the curable compound on a first side of the first layer can be brought into contact with a first layer comprising the deposited catalyst. Thereafter, the curable compound can be added to a second side being opposite to the first side of the first layer. Said second side can then be brought into contact with another first layer comprising the deposited catalyst so as to intermix. This procedure can be repeated several times until a composite structure of a desired thickness or desirable stiffness is obtained. In the event that no second component is present, the just described stacking procedure is analogous, wherein two or more first layers are arranged above one another such that the first component is arranged between two successive first layers.

A thickness of the first layer(s) is preferably based on the application of the composite structure, for instance for vibration damping or noise attenuation, or limitations like the fact that for thicker first layers (h1) thinner second layers (h2) are required in order to obtain a composite structure of a particular overall thickness. To this end, the thickness of the first layer(s) can be set and an optimum thickness of the second layers is determined for instance using finite element simulations, and while keeping the thickness ratio h1/h2 above 50. An optimum thickness of the second layer can be such that a damping provided by the composite structure becomes largest. The smaller the thickness of the second layer(s) h2 the stiffer the composite structure will be but if it too small the damping may not be very large. For instance, an optimum thickness can be obtained by maximizing either E" or the product $\tan\delta\,(E'/\rho)^{1/2}$. Once the thickness of the second layer(s) h2 is selected, a mass fraction of the first component in the solution such as the polymer solution is selected. In the event that the first component does not fully cover the surface area of the first layer, pressure can be applied to the composite structure for instance with the aid of a pressing machine that helps to distribute more homogeneously the first component between the first layers and to obtain better wetting and thus adhesion.

The first layer and the further first layer are preferably pressed against one another. These layers are preferably pressed against one another by applying a pressing force, and wherein said pressing force is particularly preferably applied homogeneously over an entire surface area of the composite structure.

At least one surface of the first layer is preferably pre-treated such as a plasma or corona treatment before receiving the first component and/or the second component. That is, at least one surface of the first layer and, if applicable, of one or more further first layers may be subject to a pre-treatment such as a physical treatment and/or a chemical treatment, for example a plasma treatment, a corona discharge treatment, a flame treatment, blasting or a combination thereof for the purpose of improving or enhancing the adhesive strength and/or the mechanical interlocking mechanism between the first layer and the second layer.

However, it is likewise conceivable that no such surface treatment is performed. Instead, it is preferred that the second layer is removed from the first layer after its manufacture. In this case, the manufacturing process can be used to obtain a layer of material. If the material of the layer is a polymer as described earlier, its production can be understood as the production of a bulk polymer. That is, the method according to the invention allows the production of bulk materials such as bulk polymers.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

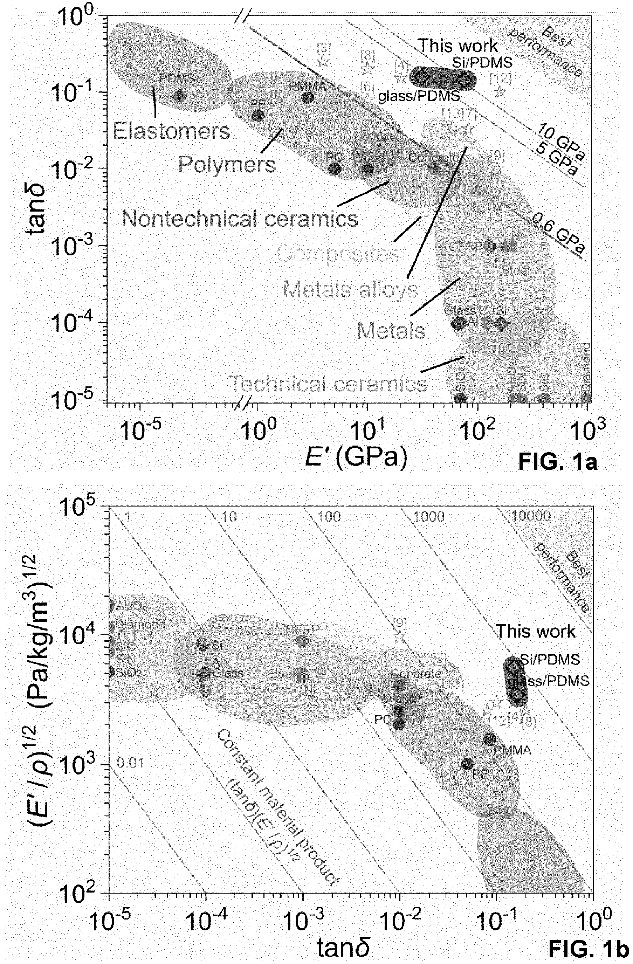

Fig. 1     shows materials selection maps for applications where high stiffness, high damping and usually low mass are essential properties. Two composite structures according to the invention are also shown on the maps for comparison, a) Ashby plot of the material's loss factor against its storage modulus, b) Square root of the specific modulus - loss factor chart as a refined figure of merit;

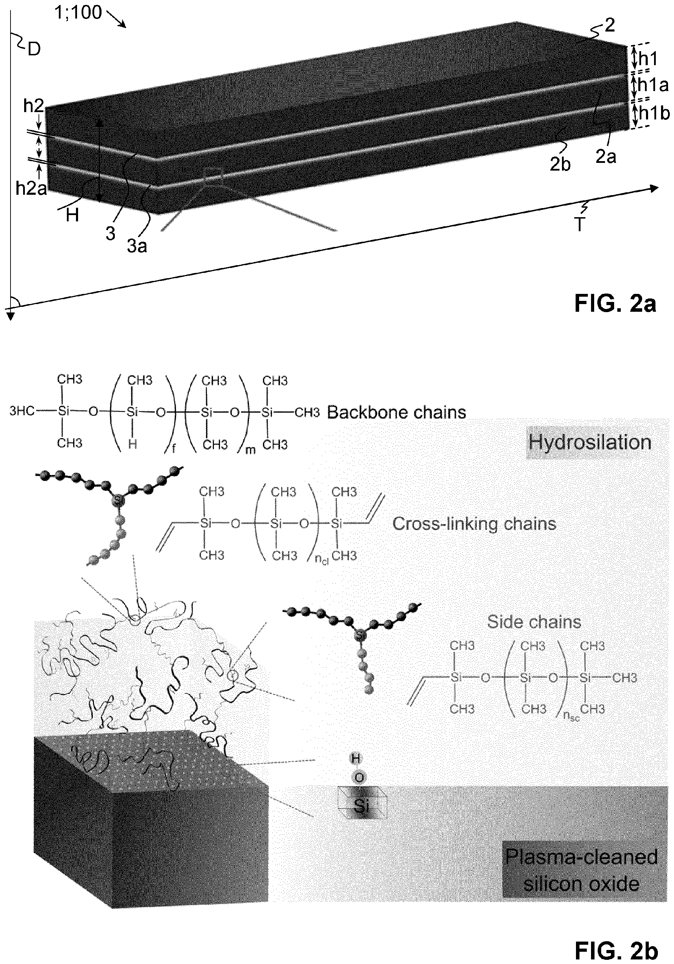

Fig. 2     shows schematics illustrating the design strategy, a) Schematic representation of a composite structure according to the invention in the form of a strip consisting of three equally thick stiff layers to provide rigidity and two equally thin viscoelastic layers. b) The viscoelastic layer built up;

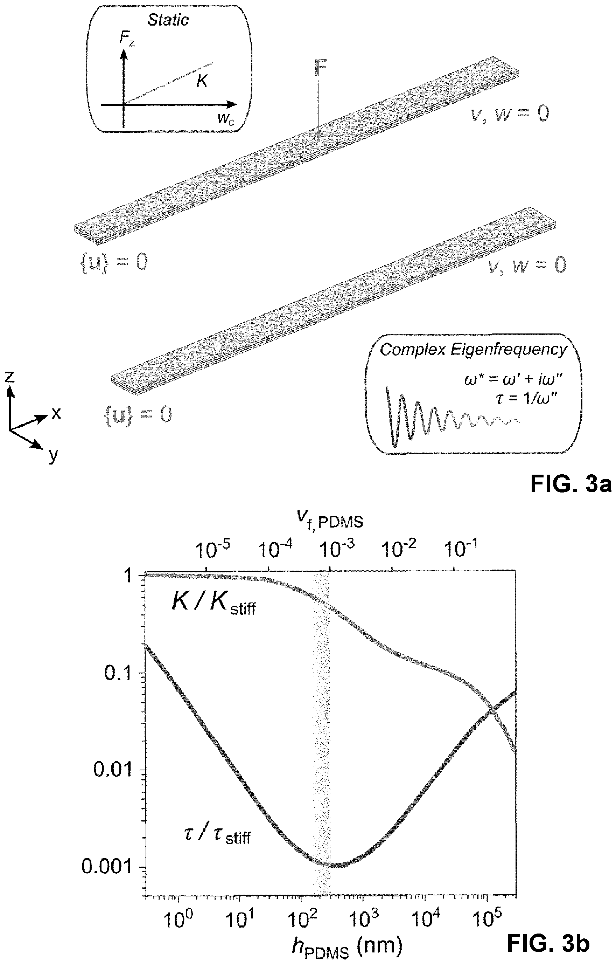

Fig. 3a     shows an illustration of the static and complex eigenfrequency FEM calculations for the design of the composite structure strips according to the invention in a simply supported layout;

Fig. 3b     shows design curves for the silicon composite structures according to the invention;

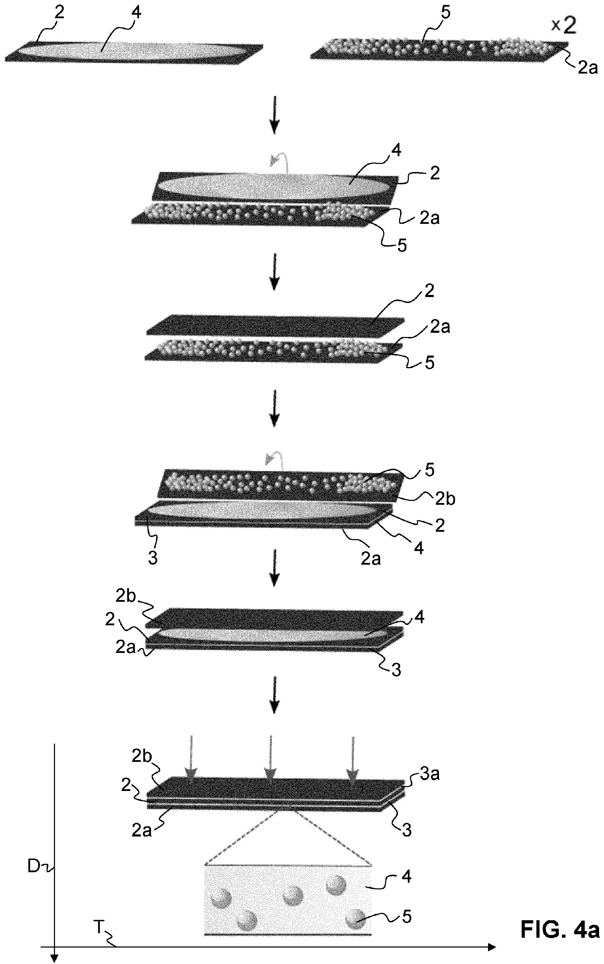

Fig. 4a     shows an illustration of the stacking of the composite structures according to the invention;

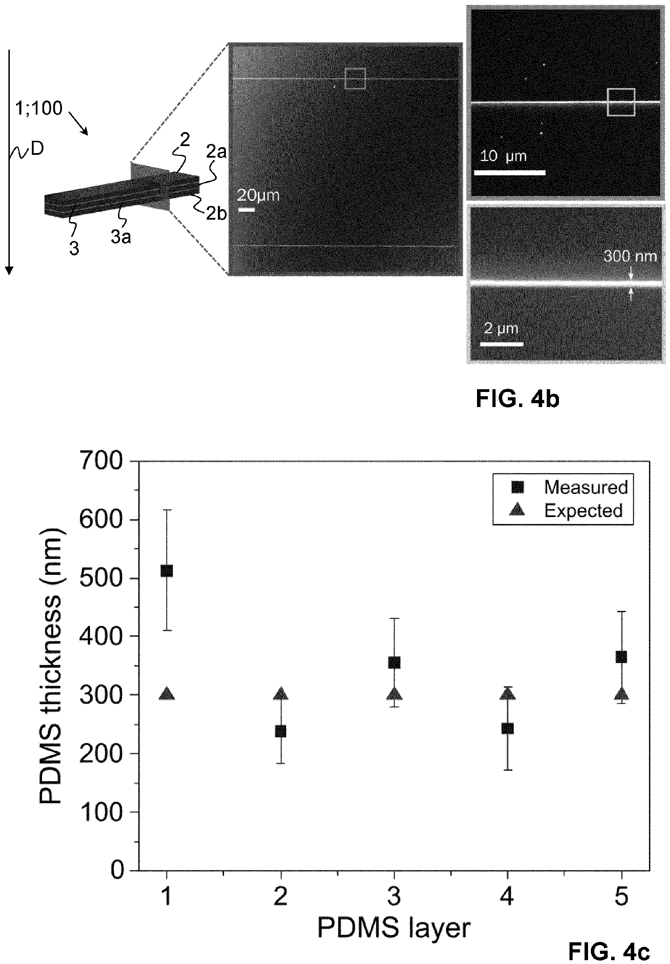

Fig. 4b     shows representative scanning electron microscope (SEM) images for the inspection and measurements of the PDMS layer thickness throughout a part of the cross-section of the composite structure according to the invention;

Fig. 4c     shows a graph depicting the measured thickness of five different PDMS layers of three composite structures according to the invention;

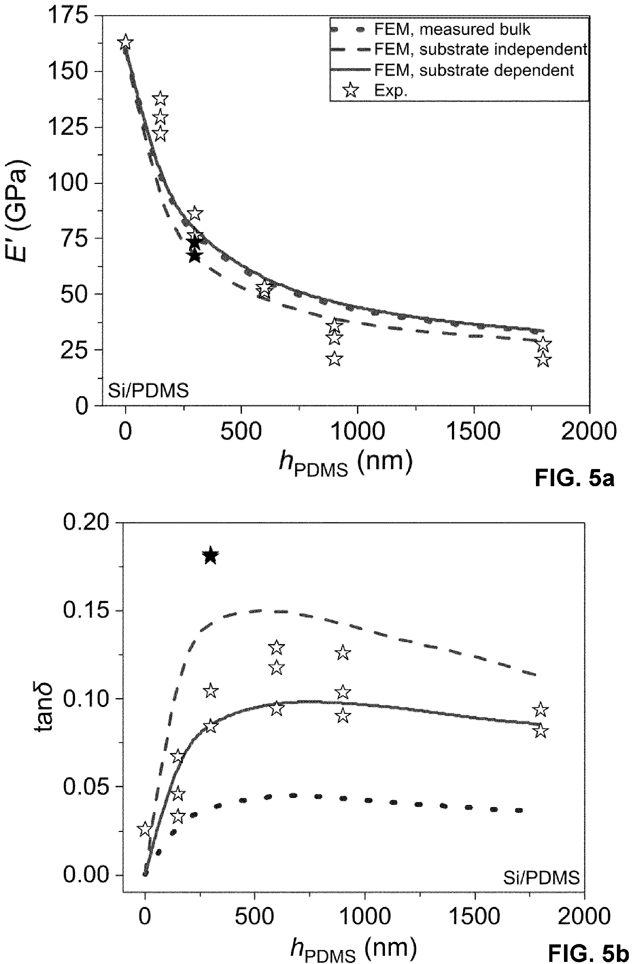

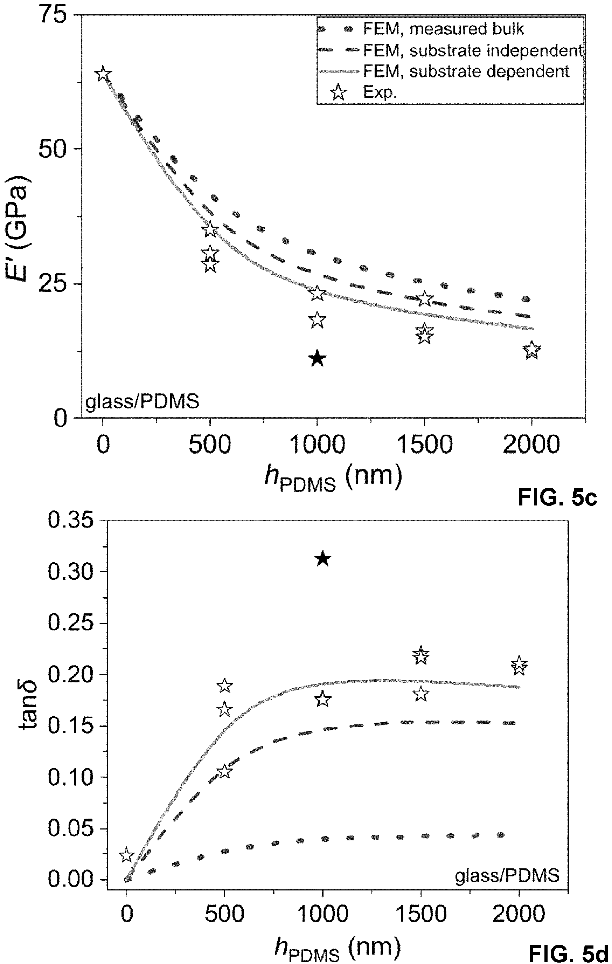

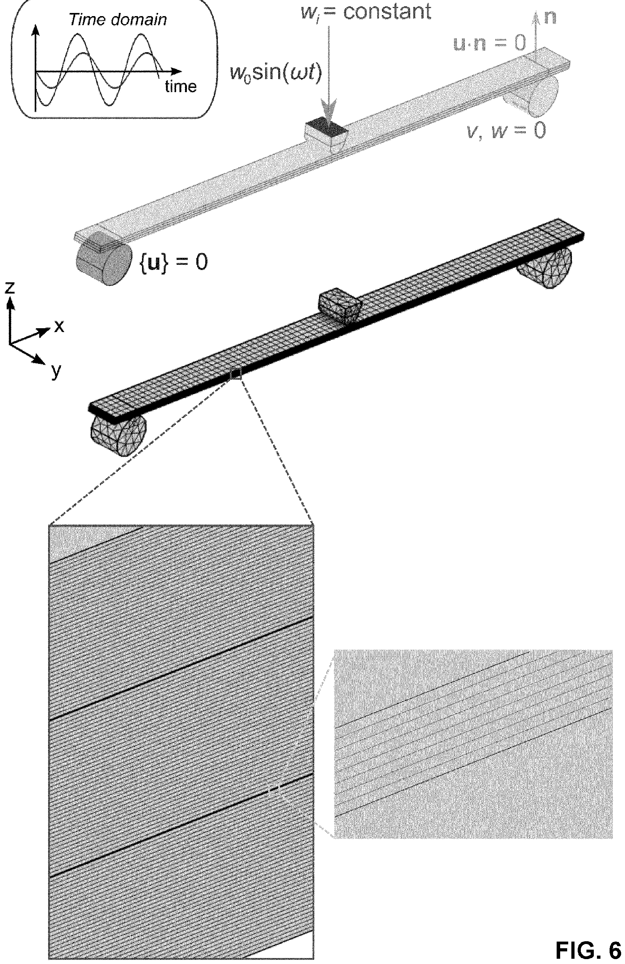

Fig. 5     shows graphs depicting storage modulus, E', and loss factor, $\tan\delta$, as measured in 3PB at 1 Hz and 21 °C for samples prepared with different PDMS layer thicknesses, a) and b) of silicon composite structures according to the invention, and c) and d) of glass composite structures according to the invention (stars), compared with predictions of the FEM simulations (continuous curves, see also Figure 6);

Fig. 6     shows an illustration of the 3PB reproduction FEM simulations and schematic of the 3D mesh in multi-scale levels;

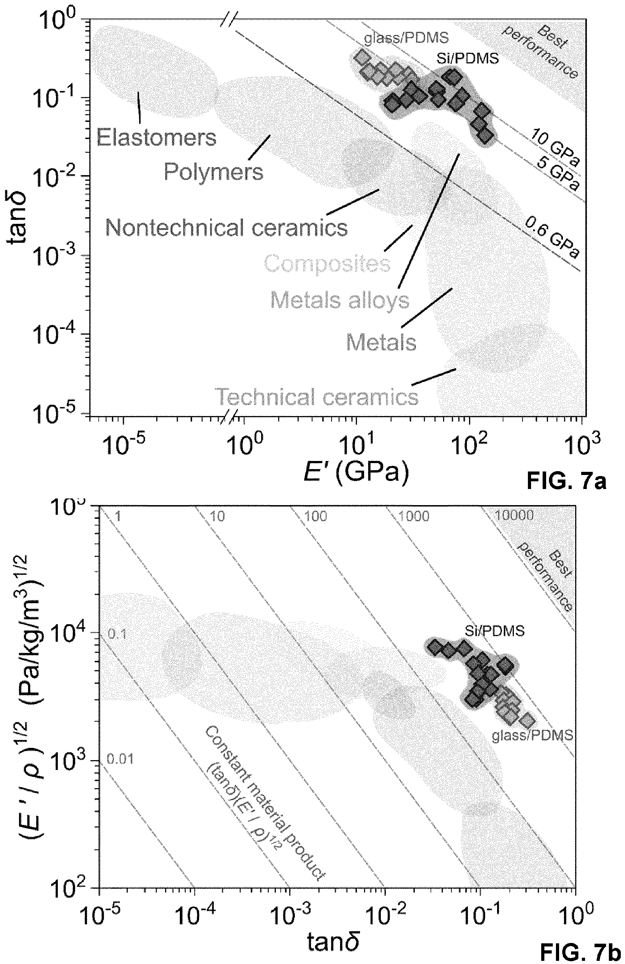

Fig. 7     shows materials selection maps (see also Figure 1). a) Loss factor - elastic modulus Ashby map with dark grey and light grey diamonds for silicon and glass composite structures according to the invention, respectively, b) Square root specific modulus - loss factor map of the realized silicon and glass composites;

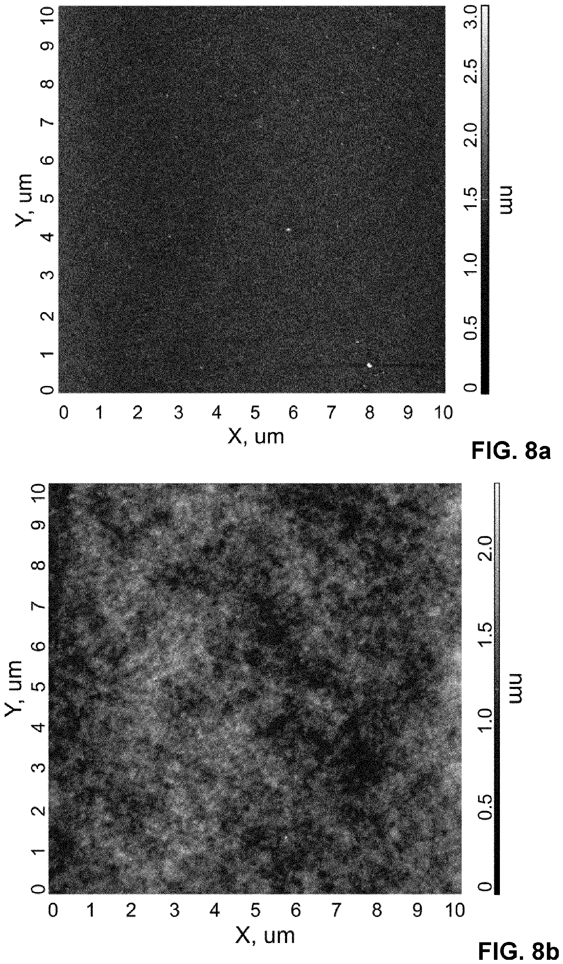

Fig. 8     shows AFM images of the stiff substrates, a) Silicon, and b) glass;

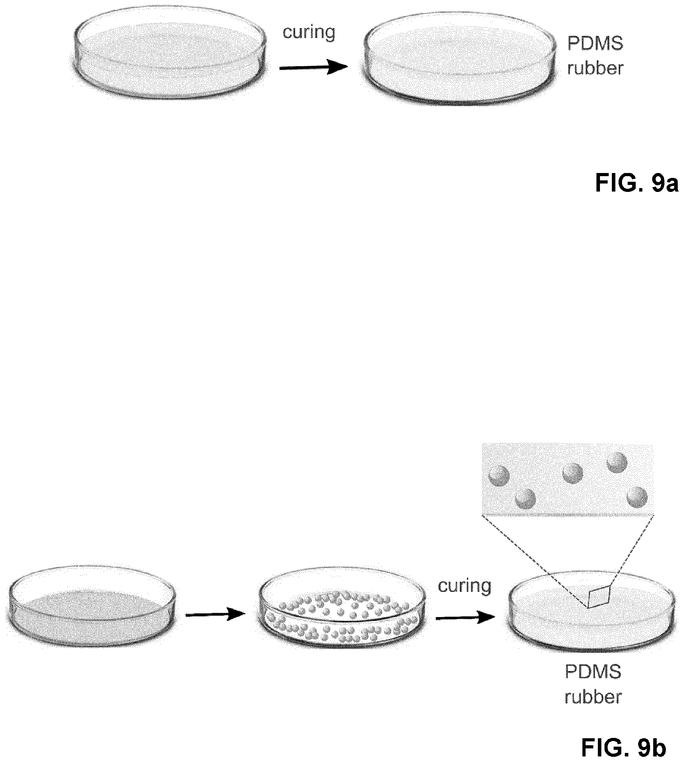

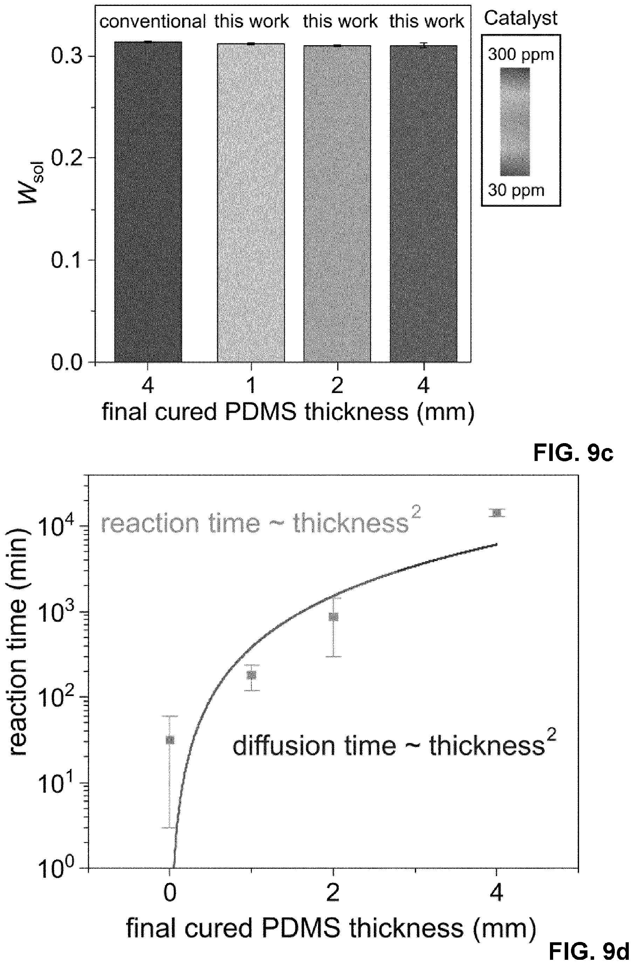

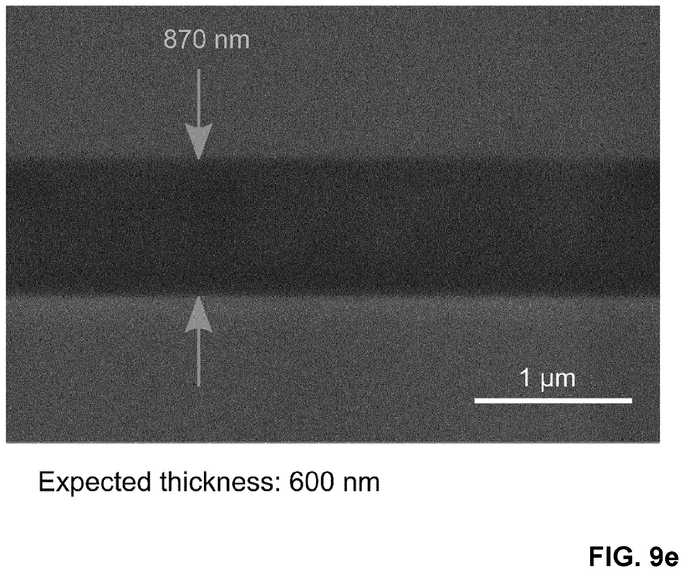

Fig. 9     shows a) a schematics illustrating the conventional pathway and b) the proposed route for fabricating the PDMS elastomers through diffusion of catalyst species into the PDMS melt. c) a graph depicting the weight fraction of the soluble material as obtained from samples prepared with the conventional route and the fabrication route according to the invention. d) a graph depicting the approximate time required for the complete curing against the thickness of the final cured samples. e) shows an SEM image of a PDMS interlayer prepared to have a thickness of 600 nm, according to the volume and concentration of the PDMS precursor mixture deposited during fabrication;

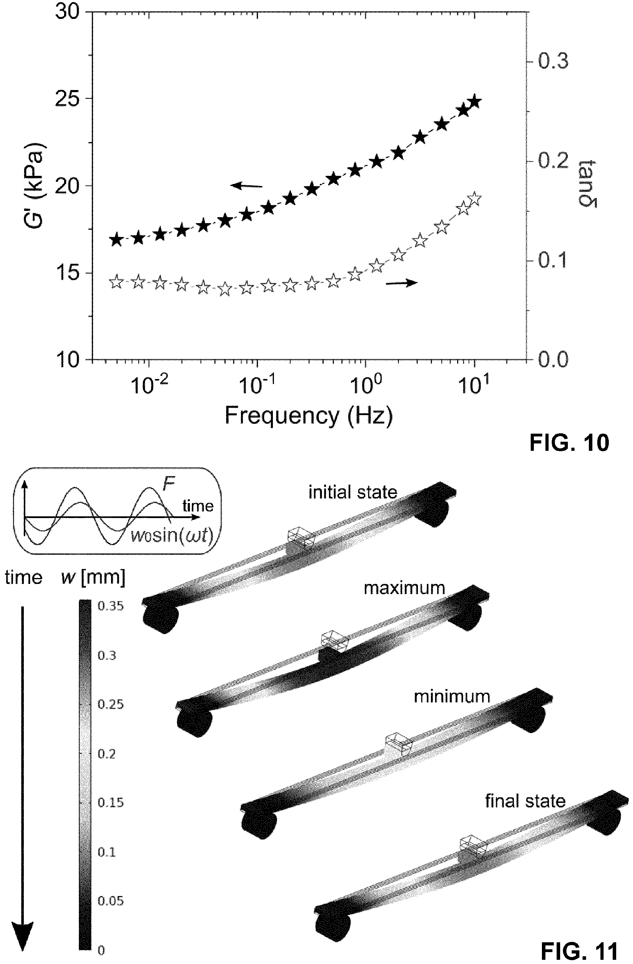

Fig. 10     shows a graph depicting storage shear modulus and loss factor as a function of frequency for bulk PDMS samples prepared with the route according to the invention. The measurements were conducted at room temperature in compression;

Fig. 11     shows an illustration of the 3PB reproduction simulations. Four snapshots of the setup displacement taken at different time steps of a typical dynamic simulation showing the progression of a simulation dynamic cycle;

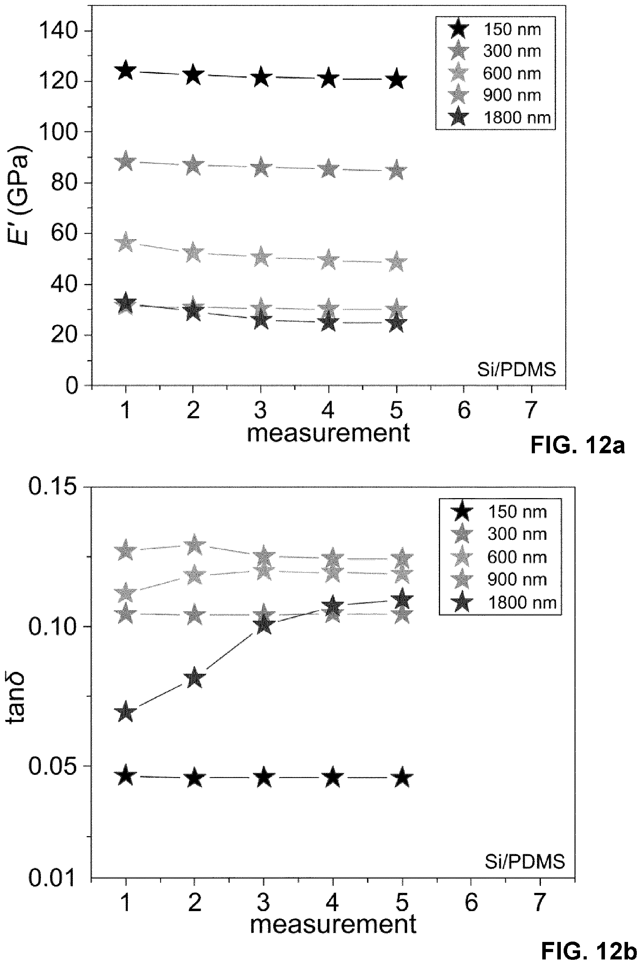

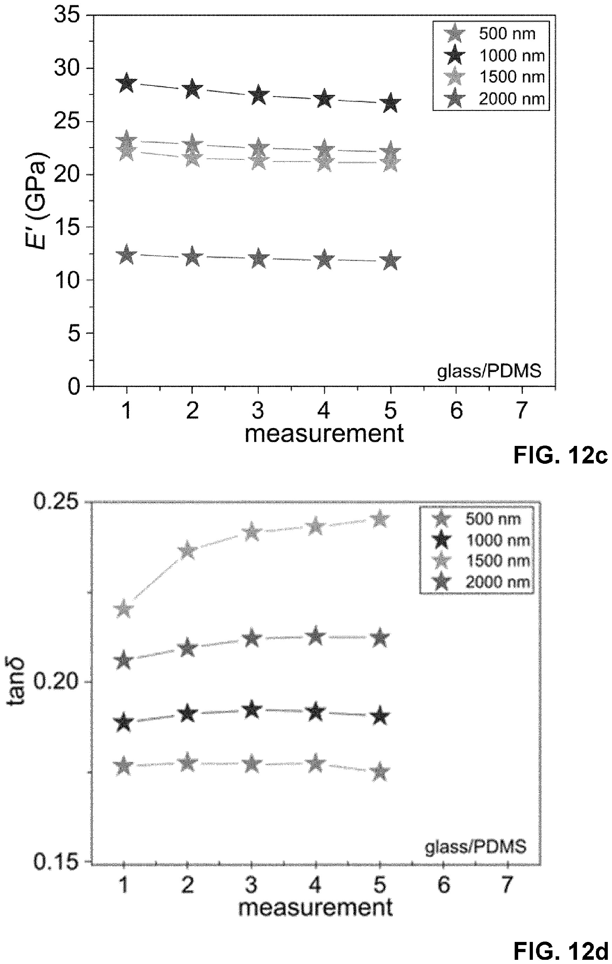

Fig. 12     shows graphs depicting the dynamic properties of the composite structures according to the invention against the number of dynamic cycles. a) and b) Storage modulus and loss factor, respectively, for the Si/PDMS composite structures according to the invention, and c) and d) Storage modulus and loss factor, respectively, for the glass/PDMS composite structures according to the invention;

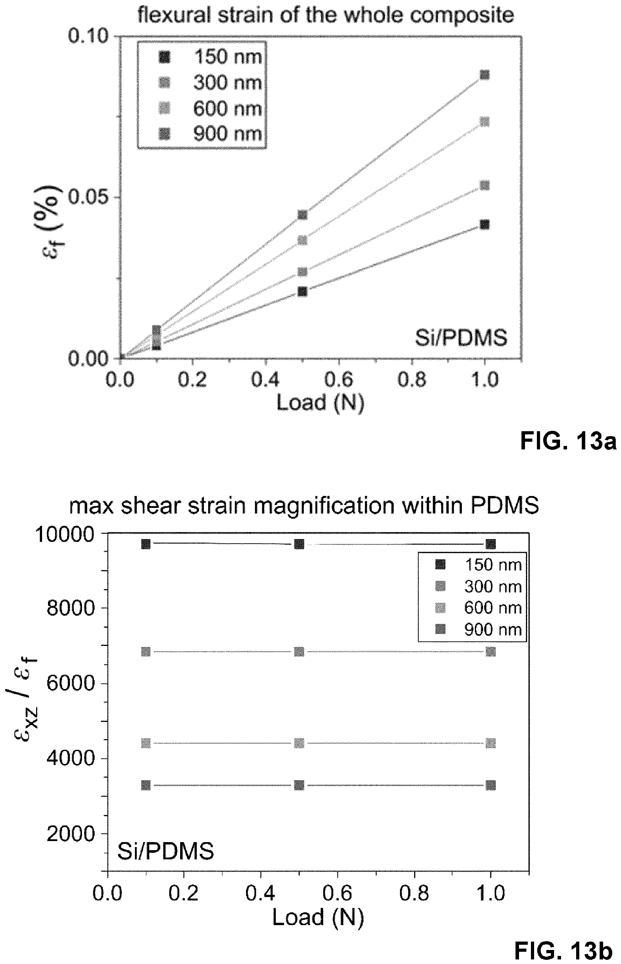

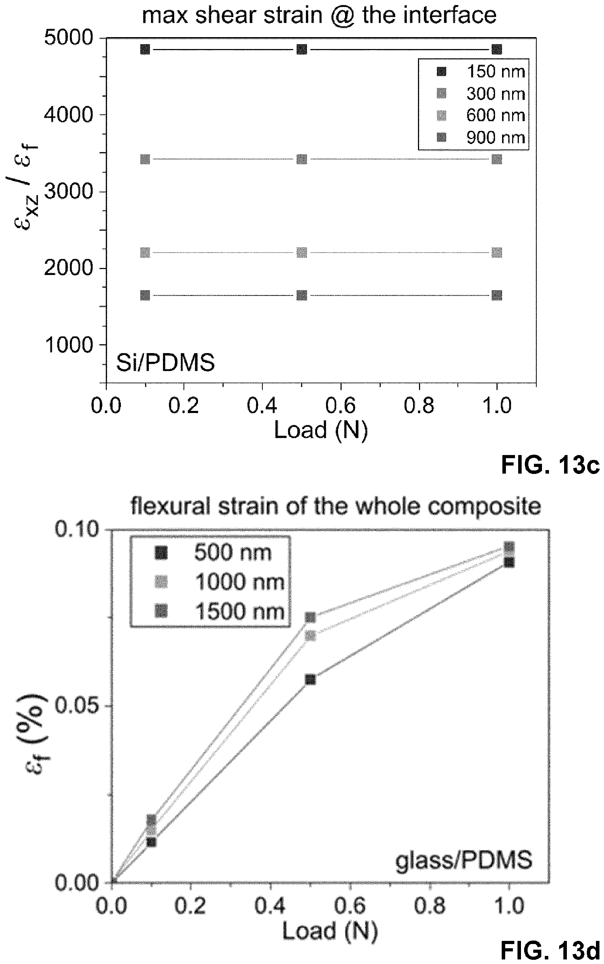

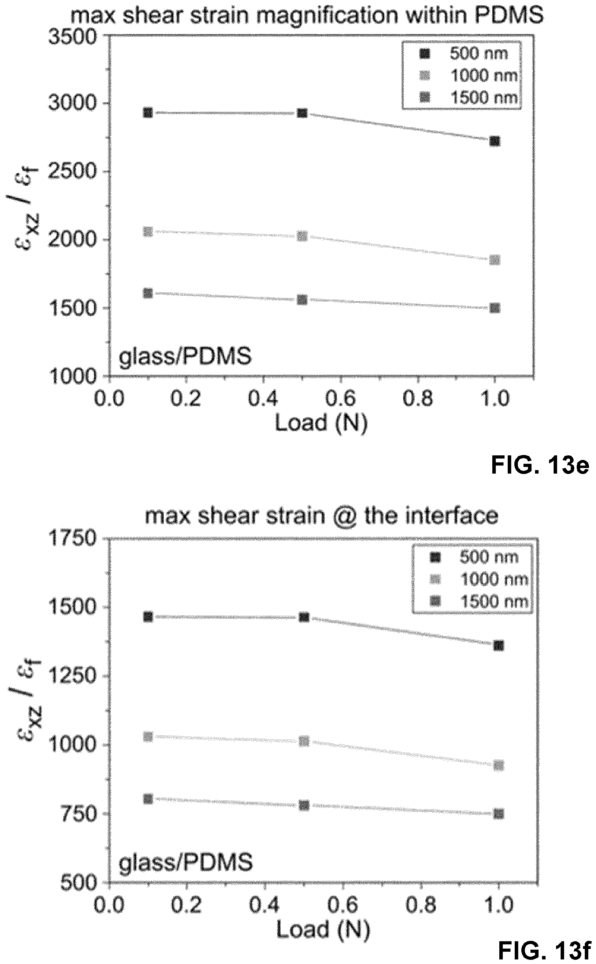

Fig. 13     shows graphs depicting insight from static FEM simulations to demonstrate the highly non-affine deformation upon bending for composite structures according to the invention with various interlayer thicknesses, a) and d) Flexural strain, $\varepsilon_f$, as a function of the applied load. b) and e) maximum transverse shear strain magnification within the PDMS interlayers. c) and f) maximum transverse shear strain magnification at the interfaces between PDMS interlayers and the stiff surrounding layers;

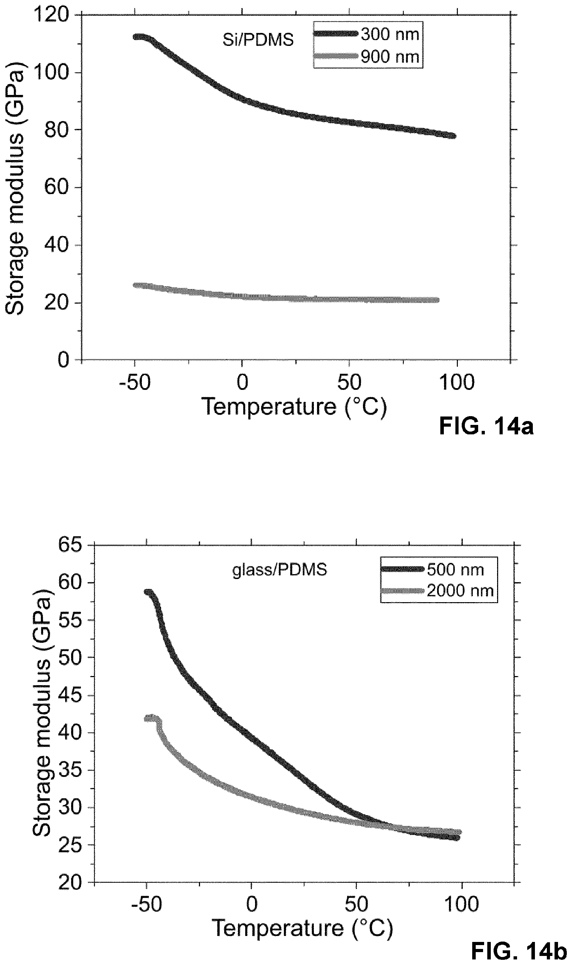

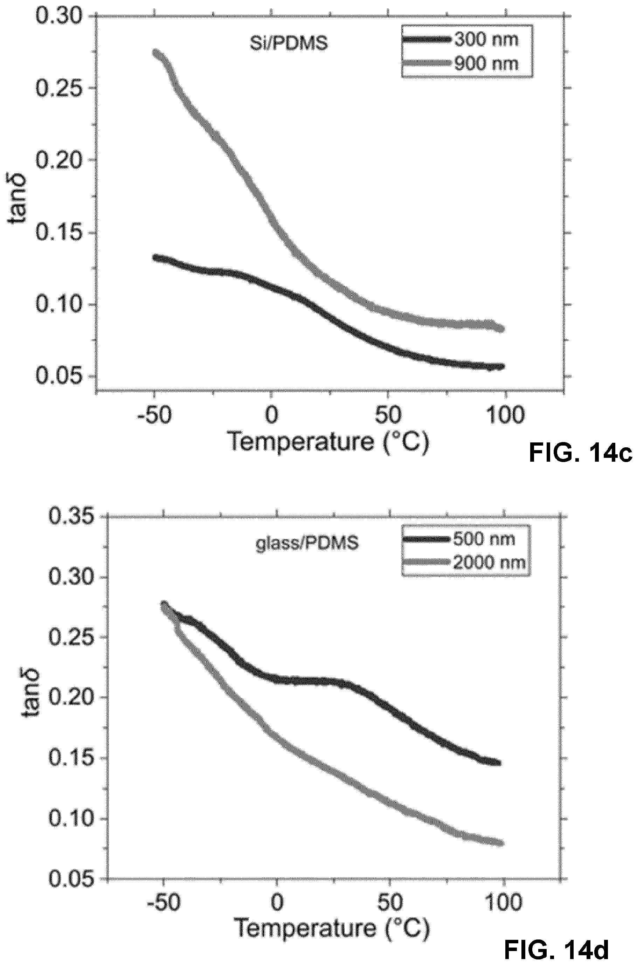

Fig. 14     shows graphs depicting temperature scans in composite structures according to the invention with two different PDMS interlayer thicknesses, wherein the temperature scans were performed at a frequency of 1 Hz. a) Storage modulus, and c) loss factor of silicon composite structures fabricated with 300 nm and 900 nm thin PDMS layers. b) Storage modulus, and d) loss factor of glass composite structures fabricated with 500 nm and 2000 nm thin PDMS layers;

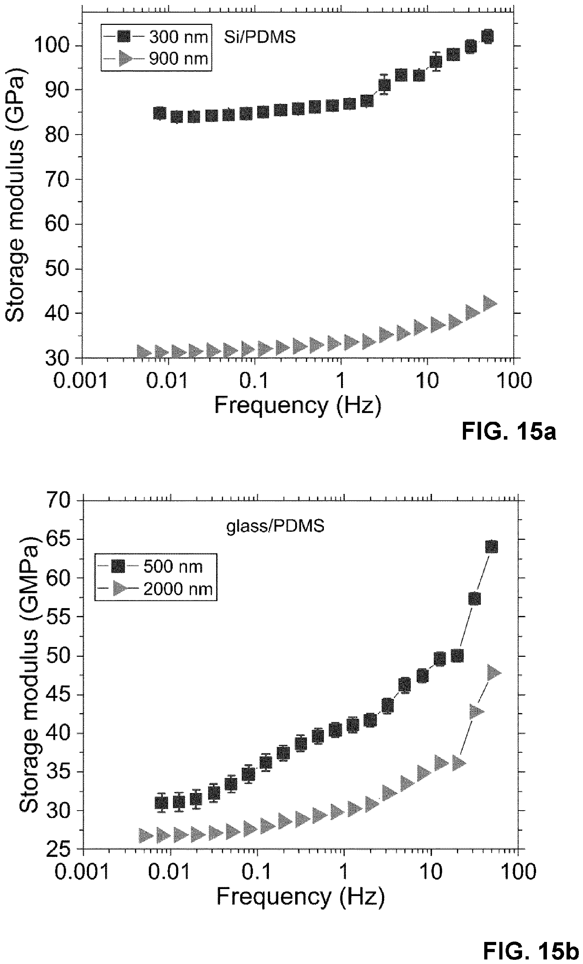

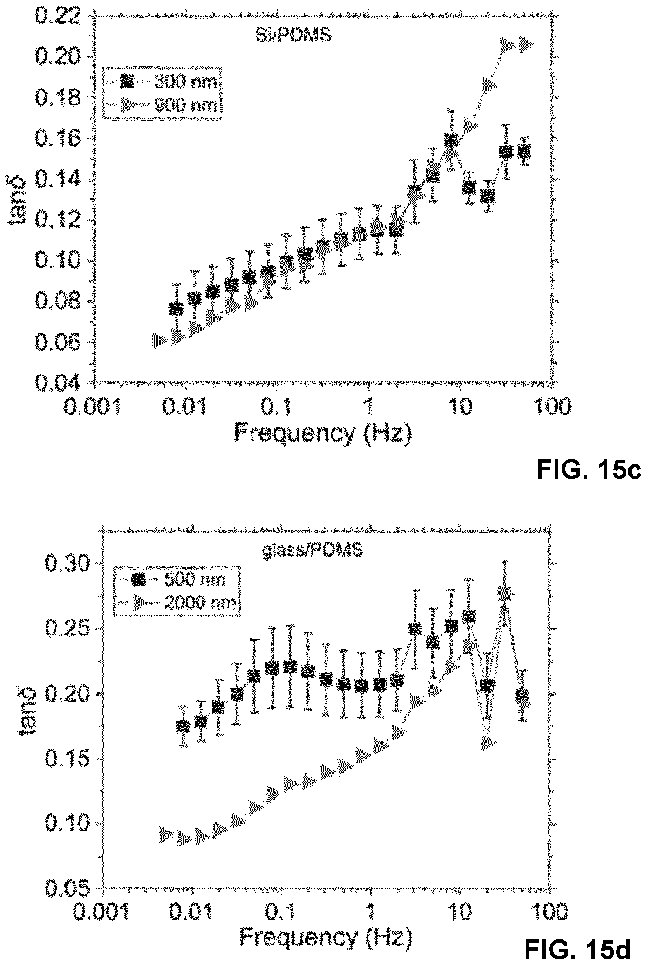

Fig. 15     shows graphs depicting frequency scans in composite structures according to the invention with two different PDMS interlayer thicknesses, wherein the frequency scans were performed at a temperature of 21 °C. The graphs mirror those in Figure 14 because of the temperature-frequency superposition principle. Again, a) storage modulus, and c) loss factor of silicon composite structures fabricated with 300 nm and 900 nm thin PDMS layers. b) Storage modulus, and d) loss factor of glass composite structures fabricated with 500 nm and 2000 nm thin PDMS layers;

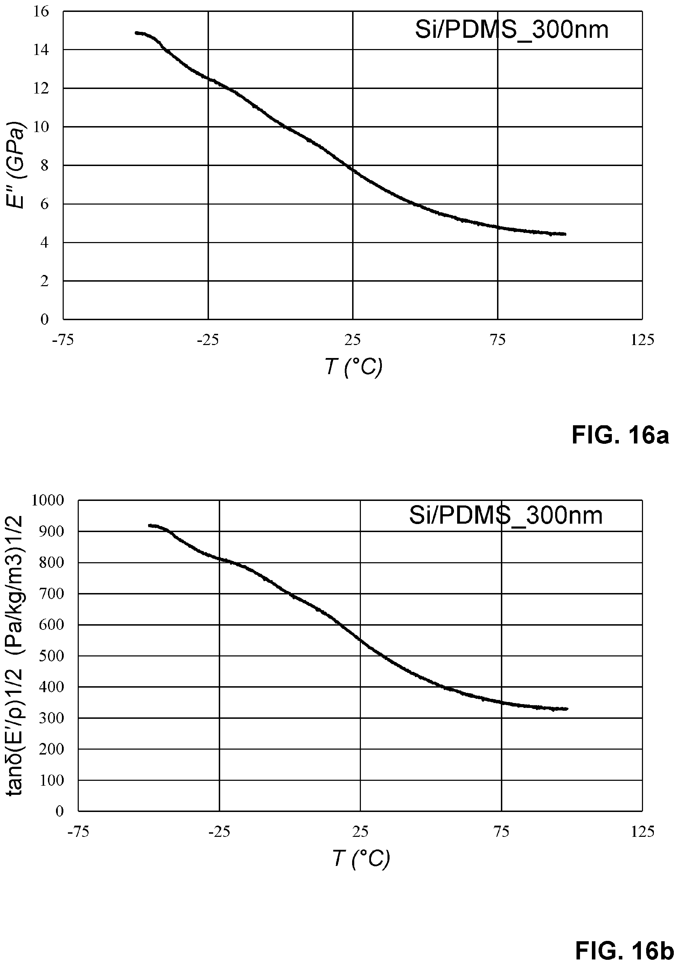

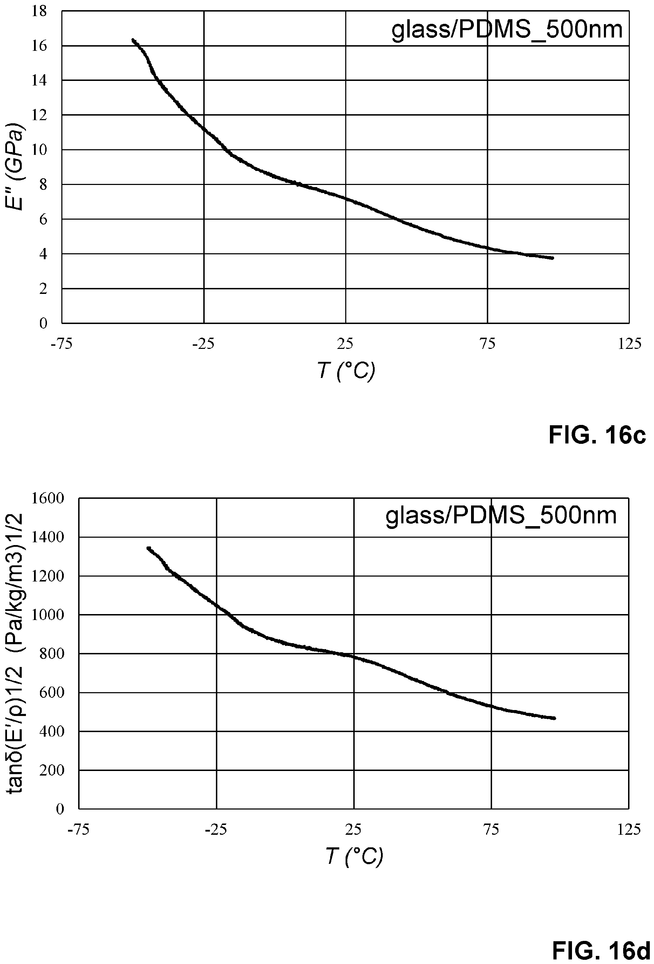

Fig. 16     shows graphs depicting temperature scans in composite structures according to the invention with two different PDMS interlayer thicknesses, wherein the temperature scans were performed at a frequency of 1 Hz. a) Loss modulus, and c) Square root of the specific modulus - loss factor product of silicon composite structures fabricated with 300 nm thin PDMS layers. b) Loss modulus, and d) Square root of the specific modulus - loss factor product of glass composite structures fabricated with 500 nm thin PDMS layers;

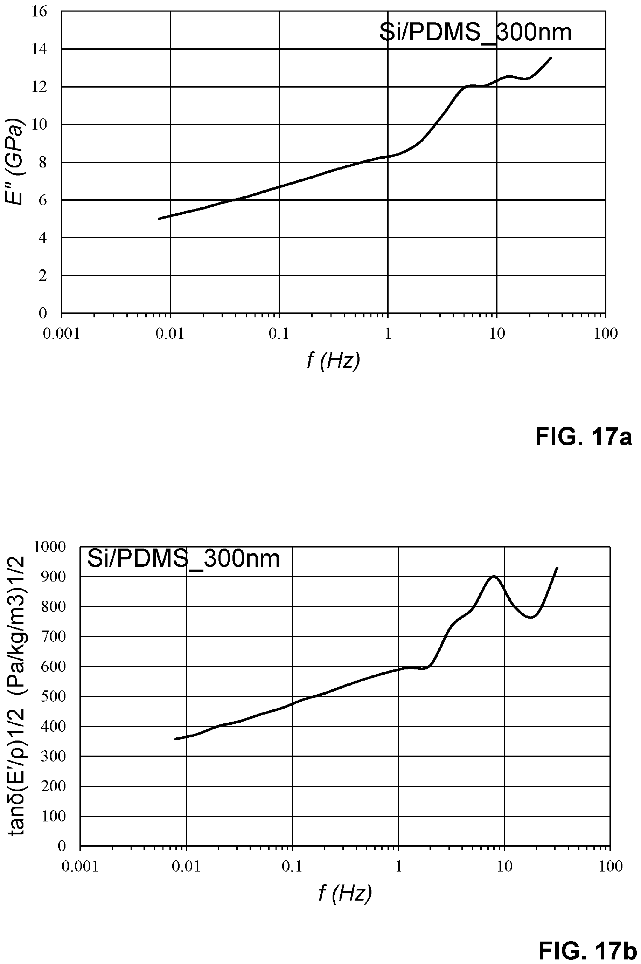

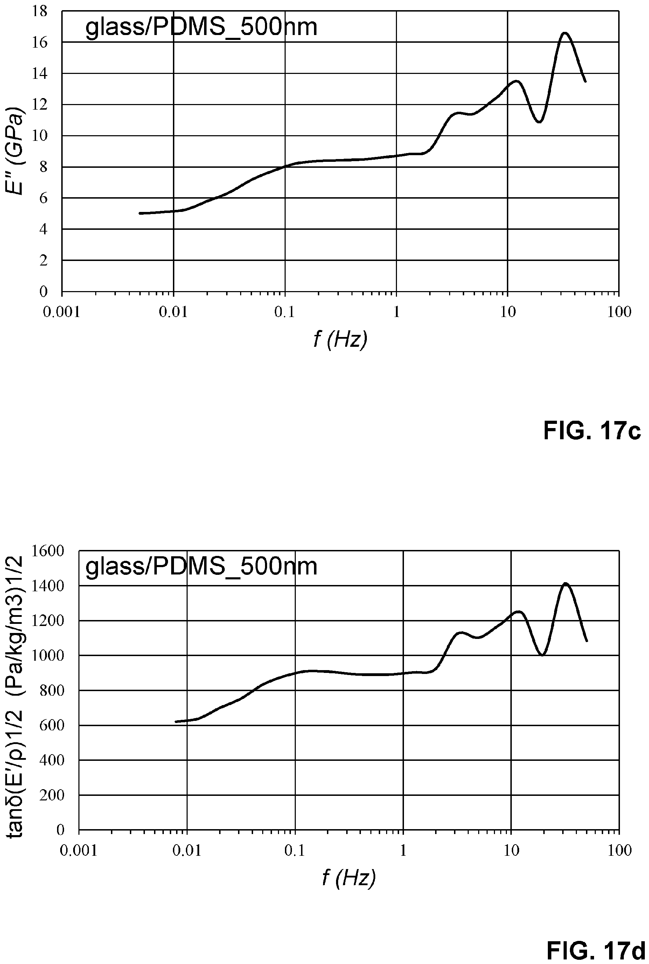

Fig. 17     shows graphs depicting frequency scans in composite structures according to the invention with two different PDMS interlayer thicknesses, wherein the frequency scans were performed at a temperature of 21 °C. The graphs mirror those in Figure 14 because of the temperature-frequency superposition principle. Again, a) loss modulus, and c) Square root of the specific modulus - loss factor product of silicon composite structures fabricated with 300 nm thin PDMS layers. b) Loss modulus, and d) Square root of the specific modulus - loss factor product of glass composite structures fabricated with 500 nm thin PDMS layers.

## DESCRIPTION OF PREFERRED EMBODIMENTS

Various aspects of composite structures according to the invention are now illustrated with respect to the figures.

Figure 1a depicts the widely used Ashby map of materials selection for structural vibration damping applications, in which the storage modulus, E', is plotted against the material's loss factor, $\tan\delta$, a typical measure of the damping capacity. Figure 1b presents a refined figure of merit [18] for selecting high performing materials for applications where stiff and damping as well as lightweight viscoelastic beams and plates are needed [18-20]. The two materials selection charts evidently reveal the limitation of traditional materials in merging stiffness with damping. For this reason, a variety of composite materials has been designed that share the feature of non-affine deformation, giving rise to enhanced viscoelastic damping [11,12,21,22]. What prompts high viscoelastic loss in such composites is that the relative deformation of the lossy compliant phase is higher than that of the composite as a whole [21]. The simplest of such composite structures is a two-phase laminated structure in which stiff layers alternate with compliant viscoelastic layers through the thickness direction of the composite [11,12]; other common strategies are briefly described in section S1 of the Supporting Information. The stiff layers provide rigidity while the compliant layers provide the energy dissipation. However, a composite structure with this vertical stack alignment can only be stiff enough if the volume fraction of the stiff phase is substantial or the compliant phase itself is also quite stiff [12,22]. In this latter case, a soft metal may be used as the compliant phase, resulting in a highly stiff composite structure [12,21]. For instance, a composite structure of tungsten interlayered with indium-tin eutectic alloy exhibits an elastic modulus of 160 GPa and a loss factor of 0.1 at 0.1 Hz,[12] (see Figure 1a). This high elastic modulus, however, originates from the very stiff tungsten so the composite is inevitably heavy with a density of about 18 g/cm$^3$. In contrast, a soft near-incompressible polymer as the compliant phase does not load the structure with extensive weight and favors the damping capacity over the stiffness due to its high loss factor but low rigidity [22]. In fact, not only can a very small amount of a viscoelastic rubber-like polymer lead to a stiff composite structure but it can also promote the composite structure stiffness because of its nearly incompressible nature and the related Poisson effects [23,24].

Figure 1 depicts materials selection maps for applications where high stiffness, high damping and usually low mass are essential properties. Our two selected composites structures are also shown on the maps for comparison, a) Ashby plot of the material's loss factor against its storage modulus. The black guide line with a product of 0.6 GPa represents the typical trade-off limit of the loss flexural modulus, E'' = $\tan\delta$·E', which most traditional materials do not overcome. b) Square root of the specific modulus - loss factor chart as a refined figure of merit, which is derived based on theoretical analysis of the normal modes of vibrations of viscoelastic beams and plates using classical Bernoulli-Euler and Kirchhoff-Love theories and the elastic-viscoelastic correspondence principle [18-20]. In both plots, the stars are some of the leading composite structures in the literature designed and fabricated to break the stiffness - damping trade-off. The properties of the composite structures shown are measured values at 1 Hz and 21 °C (with the exception of reference [12], where the frequency was 0.1 Hz, and reference [7], where it was 10 Hz). The constitutive materials of our composite structures are also presented in the graphs by diamonds. In (b), the symbol corresponding to PDMS ($\tan\delta = 0.09$ and

$$\tan\delta \cdot (E'/\rho)^{1/2} = 5 \; \text{(Pa/kg/m)}^{1/2} \qquad \tan\delta\sqrt{E'/\rho} = 5\left(\text{Pa/kg/m}^3\right)^{1/2}$$

) falls way outside the range of the plot.

When a soft polymer interlayer is sandwiched between stiff constraining layers, under bending deformation, the viscoelastic layer experiences significantly amplified transverse shear deformation; the damping mechanism is known as constrained layer damping (see section S2 of the Supporting Information). To enhance the damping performance, usually, the viscoelastic polymer is utilized in the region of its glass transition temperature where the internal friction of the polymer chains is strongest [25,26]. However, it is also commonly desirable to incorporate a viscoelastic polymer that possesses a high loss factor not only within a narrow frequency and temperature range, but over a broad range [27,28]. For this, lightly cross-linked elastomers with a molecular architecture abundant in dangling and free macromolecular structures with broad molar mass distributions constitute an appealing alternative.

## 2. Strategy and Design

In this work, we rise to the challenge of producing materials that simultaneously combine high stiffness and high damping by proposing and fabricating a simple composite structure consisting of stiff layers interlaid by very thin compliant elastomer layers (Figure 2a). PDMS was chosen as the compliant material because of its very low glass transition temperature (about -120 °C), its easy availability and its tunable properties, which are acquired by controlling topological characteristics of its molecular network [29,30]. Comb-like networks are well-known to exceed the "golden rule" between the modulus of elasticity and the elongation at break thanks to their low grafting density and their dangling side chains which act as a diluent thereby releasing entanglements, making the network softer, and increasing the stretch ratio at break [31-33]. Furthermore, few relatively long side chains that are sparsely dangled along the backbone chains will have intermediately fast relaxation dynamics corresponding to high values of $\tan\delta$ over a wide range of frequencies and temperatures; the molecular weight of the side chains and their grafting density considerably affect the dynamic mechanical response of the elastomer [31,34]. Also, a loosely cross-linked network, with just few cross-linking chains, will result in a polymer network with more soluble material, which is comprised of chains and their structures that are not connected to the infinite network after curing. The presence of both free and dangling chains and their structures with broad molecular weight distributions is expected to considerably increase the loss factor of the elastomer [28,31,34,35]. Thus, in respect of the elastomer topology, a network of comb-like polymer chains was chemically designed. The specially architected elastomer molecular network is built up with long backbone chains, relatively long side chains of low grafting density and cross-linking chains a little longer than the side chains, in a one-step synthesis via hydrosilation reaction in presence of a catalyst (for details see section S3) [31]. The elastomer chemistry and topology are illustrated in Figure 2b. This resulted in a soft and stretchable rubber with a high loss factor over a broad range of frequencies and temperatures (Figure 10).

Figure 2 illustrates the design strategy, wherein a) is a schematic representation of a composite structure 1 in the form of a strip consisting of three equally thick first layers 2, 2a, 2b in the form of stiff layers (thick) to provide rigidity and two equally thin second layers 3, 3a in the form of viscoelastic layers (thin) that have a double role: to provide with energy dissipation and to bond the surrounding stiff layers 2, 2a, 2b together. The overall dimensions of the composite structures 1 in the form of strips (approximately $0.6 \times 5 \times 50$ mm) are chosen based on our available fabrication and testing equipment. In the depicted example, the first layers 2, 2a, 2b and the second layers 3, 3a are arranged alternately above one another with respect to the thickness direction D of the composite structure 1. An overall thickness H of the composite structure 1 results from the sum of the first thicknesses h1, h1a, h1b of the first layers 2, 2a, 2b and the second thicknesses h2, h2a of the second layers 3, 3a. In the depicted example, the composite structure corresponds to a damping structure 100 that comprises a total three first layers 2, 2a, 2b and two second layers 3, 3a in the thickness direction D of the composite structure, corresponding to the thickness direction of the damping structure, wherein said composite structure 1 (or damping structure 100) furthermore extends along a transverse direction T of the composite structure 1 (or damping structure 100) running perpendicularly to the thickness direction D of the composite structure 1 (or damping structure 100).

b) The viscoelastic layer built up. The network consists of long backbone chains sparsely and randomly functionalized with f Si-H groups (beads labelled with "Si"), relatively long side chains (sc), and a little longer cross-linking chains (cl). The side chains and the cross-linking chains are mono-vinyl and di-vinyl terminated, respectively, allowing for a one-step network formation via hydrosilation.

In the opposite direction, the stiff material must be very flat to achieve thin PDMS interlayers, with roughness far below the targeted thickness of the viscoelastic interlayer of the order of 100 nm. For this reason, 2-sided polished silicon wafers and microscope borosilicate glass cover slips, which both are known to be very flat (see Figure 8), were chosen as the stiff components to the realization of two composites: Si/PDMS and glass/PDMS. Additionally, silicon is quite stiff with a stiffness of E' = 160 GPa, i.e., similar to steel, while glass is transparent with a stiffness of 65 GPa. They are both lightweight materials with densities of $\rho$ = 2.3 g/cm$^3$ and $\rho$ = 2.7 g/cm$^3$, respectively, and are utilized in a great deal of applications. Measured bulk PDMS properties are used as input in the finite element method (FEM) analysis to predict the complex fundamental angular frequency of vibration, $\omega^* = \omega' + i\omega''$, and the static bending stiffness, K, of composite structures in the form of simply supported five-layered viscoelastic strips (Figures 2a and 3a). The damping time, $\tau = 1/\omega''$, i.e., the characteristic time needed for a strip to stop vibrating naturally after an impulse, is obtained by viscoelastic eigenfrequency calculations. As discussed in our previous work [18], it represents a refined figure of merit for designing and selecting materials for advanced structural vibration damping applications. When $\tau$ is plotted together with K, which is obtained from complementary static computations, they make a design plot (Figure 3b). A minimum in the damping time signifies highest damping and directs the fabrication of our composites. The design curves for the Si/PDMS and glass/PDMS composites dictate an optimum viscoelastic interlayer thickness of about 300 nm and 1000 nm, respectively (the simulations are elaborated in section S5 of the Supporting Information).

Figure 3a depicts an illustration of the static and complex eigenfrequency FEM calculations for the design of our composite strips in a simply supported layout, where {u} = (u, v, w) is the displacement vector, F the total applied force distributed over the midline of the strip and wc the vertical deflection at the midline. Multi-scale meshes with up to a million quadratic Lagrangian brick elements are used for the strips, see Figure 6. A mixed (strain form) formulation is used in both static and viscoelastic eigenfrequency calculations, which were performed using COMSOL Multiphysics [42], see section S5. Figure 3b depicts design curves for the silicon composites. The targeted optimal thickness range (shaded area) provides a guide in achieving stiff and damping composite structures. The design plot is formed by the reduced damping time and bending stiffness curves parametrized by the viscoelastic layer thickness, $h_{PDMS}$, as predicted by the FEM calculations using measured bulk properties of our comb-like PDMS at 1 Hz and 21 °C, i.e., a shear modulus of $G'_{PDMS}$ = 23 kPa and $\tan\delta$ = 0.09 (see Figure 10), and a thickness of Si layers of 0.2 mm. The corresponding volume fraction of PDMS, $v_{f,PDMS}$, is also shown on the same plot at the top to highlight its minute relative amount.

### 3. Results & Discussion

#### 3.1 Characterization of the viscoelastic interlayers

The previous FEM analysis suggests submicron PDMS interlayers, which are difficult to fabricate because of the oblong surface of the stiff substrates. Additionally, PDMS networks are typically cured by hydrosilation of two PDMS components, comprising alkene and silane groups, respectively, under the action of a platinum catalyst in a solvent such as toluene to facilitate mixing [43,44]. Often though, a substantial amount of solvent is to be added to the reactive mixture to allow the formation of thin films. However, curing of thin interlayers in the solution state can alter and deteriorate the properties of the elastomer networks due to the related phase-separation processes and topological molecular-network changes [45,46], as well as it can raise issues of remaining trapped solvent after the fabrication. Therefore, we fabricated the composite structures 1 by stacking a first layer 2, in the form of a substrate coated with the proper amount of a first component 5 in the form of a solvent-free mixture of the PDMS components on another first layer 2a, in the form of another substrate coated with a second component 5 in the form of a solid catalyst, as illustrated in Figure 4a; for details see section S3. It is known that in the mixture of the PDMS components the applied catalyst, cis-[PtCl$_2$(styrene)$_2$] [47], provides soluble species which are catalytically active throughout the PDMS melt. Experiments with bulk PDMS samples where the catalyst was deposited on the bottom of the Petri dishes in which the samples were cured reveals that the time needed for the cross-linking reaction to cease is proportional to the square of the thickness of the samples (Figure 9), i.e., typical for the diffusion time. This implies that it is the diffusion of the catalyst species that determines the curing. Further measurements divulge also that bulk PDMS topological properties remained unchanged when the samples were prepared with the suggested route (section S4). In light of these results, it is anticipated that the proposed novel route should prove practical and valuable for fabrication of composite structures with submicron PDMS interlayers.

Figure 4a depicts an illustration of the stacking of the composite structures 1 according to the invention, that result here in the fabrication of a damping structure 100 comprising or consisting of a composite structure 1 according to the invention: a first layer 2 in the form of a substrate with a first component 4 in the form of a solvent-free PDMS mixture and a further first layer 2a in the form of a second substrate with a second component 5 in the form of a catalyst are brought into contact carefully. Then, on the back of the first layer 2 in the form of the strip with the PDMS, another PDMS deposition step takes place. The second substrate 2a with the catalyst is carefully brought into contact with the substrate 2 carrying the freshly deposited PDMS mixture. Finally, the composite structure 1 is pressed to spread out the PDMS melt and promote wetting and adhesion, whereby a second layer 3 comprising the first component 4 and the second component 5 is formed. b) Representative scanning electron microscope (SEM) images for the inspection and measurements of the PDMS layer thickness throughout a part of the cross-section of the composite structure, which show the fineness of the layers. In the composite structure analyzed, the expected PDMS thickness, given the amount of its precursors during deposition, is 300 nm. The composite structure shown is a Si/PDMS composite structure. Figure 3c depicts the measured thickness of five different PDMS layers. The error bars represent the standard deviations within one and the same layer estimated using approximately 10 measurements, while the scatter among the different layers is representative of the variations from the expected target value.

The cross-sectional scanning electron microscope (SEM) images show that the suggested approach indeed leads to the realization of very fine and thin PDMS interlayers 3, 3a, ... in the microscale, see Figure 4b. Their thickness h2, h2a, ... is effectively controlled by the amount of the PDMS precursors, i.e., by the volume and the concentration of their initial solution used in the fabrication of the composite structure 1 (see also Figure 9e). An ideal preparation of such interlayers 3, 3a, ... presupposes the complete and homogeneous coverage of the PDMS melt 4 on the stiff substrates 2, 2a, ... and the absence of polymer squeezing out during stacking, which, however, is not necessarily the case when using the simple casting technique and assembly process employed here. Figure 4c indicates nonuniform interlayer thickness throughout each layer and variations from the expected thickness in the average interlayer thicknesses within the same or among different composites. However, the average PDMS thicknesses are in the expected range. Note that it is extremely difficult to prepare thin interlayers with submicron thickness. All in all, the proposed solvent-free fabrication route is rather simple and successful, even though the quantity of PDMS is minimum, and it constitutes a suitable novel alternative to the realization of multilayered composites, especially when very thin submicron interlayers are required.

3.2. Composites Mechanical Performance and Discussion

3.2.1. Dynamic mechanical properties

The flexural modulus and the loss factor of the composite structures were measured in three-point bending (3PB) to evaluate their dynamic performance (see section S3). Five Si/PDMS and four glass/PDMS sets of composite structures with different target interlayer thicknesses were fabricated and studied; for the sake of argument, we use the expected thickness to label the fabricated composites. To examine the reproducibility, consistency, and accuracy of the proposed fabrication route, each composite structure was fabricated at least twice. The measured storage moduli E' and the corresponding loss factors $\tan\delta$ are presented in Figure 5. The variance between the measured dynamic properties of each laminate of the same PDMS layer thickness reflects the difficulties in fabricating laminates with very thin submicron interlayers (Figure 4c). Nevertheless, the overall small scattering of the stiffness, which is somewhat larger for the loss factor, suggests relatively good reproducibility between the samples.

Figure 5 depicts the storage modulus, E', and loss factor, $\tan\delta$, as measured in 3PB at 1 Hz and 21 °C for samples prepared with different PDMS layer thicknesses, a) and b) of silicon composite structures, and c) and d) of glass composite structures (stars), compared with predictions of the FEM simulations (continuous curves, see also Figure 6). The dotted lines, which fail to describe the experimental results, correspond to the predictions when the measured bulk PDMS properties are used. The dashed lines, which are in better agreement, correspond to the predictions when the same reversed-engineered PDMS properties for both silicon and glass laminates are used. The solid and lines represent predictions when different PDMS properties separately fitted for silicon and glass laminates are used (see section S6). When confined under silicon, the PDMS exhibits a fitted storage modulus of 24 kPa and a loss factor of 0.21, and when confined under glass a modulus of 12 kPa and a loss factor of 0.42, while the bulk PDMS has a measured modulus of 23 kPa and a $\tan\delta$ of 0.09. The filled stars were excluded from the data sets used to fit the properties of the confined PDMS.

There is a significant scatter, though, among the loss factor of both kinds of composite structures prepared with the optimally designed PDMS thickness (as highlighted by filled stars in Figure 5). It is possible that interfacial defects accustomed to adhesive bonding technologies are present at the interfaces between the stiff and viscoelastic layers, such as kissing bonds, irregular distribution of the adhesive and local disbonds [48,49]. Kissing bonds, which often take place randomly because of the contamination of the adherent, are small areas in which adhesion is not properly established during bonding [49]. In these regions, the adherent and adhesive are in friction contact, sliding past each other under bending and therefore additionally contributing to damping, without causing a significant reduction of the bending stiffness. This kind of defects might explain why the Si/PDMS composites exhibit a significantly amplified $\tan\delta$ while their stiffness still remains high. Irregular distribution occurs when the adhesive is non-uniformly applied on the adherent, which in turn might lead to voids affecting the structural performance of the adhesive joint. Finally, local disbonds may occur progressively upon loading, adhesive aging, and other environmental factors. The considerable deviation in the glass laminate may be attributed to these last two types of defects.

Interfacial failure, however, was not present in any of the samples examined after several dynamic cycles as indicated by the constancy of the stiffness and the loss factor (Figure 12), which implies strong overall adhesion between the adjacent phases. This achievement is remarkable considering the high strains developed in the interlayers and the absence of any kind of coupling agent to promote adhesion. Due to the non-affine deformations as a result of the tremendous mismatch between the stiffness of adjacent stiff and compliant phases, the microscopic transverse shear deformations within the viscoelastic phase are much larger than in the stiff layers (see Figure 13). Yet, the enhanced damping stems from the highly lossy elastomer jointly with the amplified shear deformations developed within the compliant material, and therefore such high deformations are intrinsically not to be avoided. In turn, the high shear strains cause high stresses that can easily lead to the delamination of the composite during bending. Thus, the achieved absence of delamination should be considered by no means a trivial task.

The effect of the PDMS thickness is apparent in Figure 5; an increase in the interlayer thickness leads to a significant monotonic decrease in stiffness. Instead, when it comes to the loss factor, a considerable increase takes place already with the introduction of a very small amount of the viscoelastic phase, after which the loss factor progressively increases to reach a maximum value. The minimum in damping time (Figure 3b) is present in the loss factor as a maximum, but it is broadened and slightly shifted towards higher PDMS thicknesses. The maximum is more distinct in the silicon composite structures than in the glass composite structures, presumably because of the stronger difference between the constituent moduli. The Si/PDMS composite structures fabricated with PDMS thickness that, by design, minimizes the damping time exhibit on average a modulus of 76 GPa and a loss factor of 0.14. The glass/PDMS composite structures with

$h_{PDMS}$ = 1000 nm, which is close to the predicted optimum, exhibits a modulus of about 18 GPa with a loss factor of approximately 0.21. In general, the glass composite structures have lower modulus than the silicon composite structures due to the modulus difference of the pure stiff materials (glass has a more than two-fold lower modulus). The broad range of modulus and loss factor combinations obtained only by changing the viscoelastic layer thickness demonstrates the material by design feature of our composite structures.

The fabricated systems were reproduced using finite element method (FEM) simulations that mimic the 3PB experimental setup (Figure 6 and section S5). To avoid any assumptions and for the sake of simplicity, the measured bulk PDMS properties (Figure 10) were initially used as input in the design simulations (Figures 3). Yet, the assumption that the PDMS properties remain unchanged upon confinement into thin layers ceases to hold as evidenced by the reproduction simulations shown in Figure 5 (dotted lines). Admittedly, the submicron interlayer thicknesses are close to the nanometer scale, which reasonably raises concerns about the possibility of using thickness-independent mechanical properties, as discussed in section S6. To discover the properties of the confined PDMS we reverse-engineered them; many different pairs of shear modulus and loss factor have been tested, and the one with the smallest residual deviation from the measured values was used in the reproduction simulations (the detailed investigation can be found in section S6).

Figure 6 depicts an illustration of the 3PB reproduction FEM simulations and schematic of the 3D mesh in multi-scale levels. The geometric setup with the applied boundary conditions, where n is the normal vector to the boundary, is shown on the left. Mimicking the real 3PB test, $w_i$ is the imposed initial displacement in the z-direction, while $w_0\sin(\omega t)$, with $\omega$ being the angular frequency and t the time, is the applied oscillatory displacement. Both static and oscillatory displacements are applied on the area highlighted in dark grey. The mechanical properties of the PDMS upon confinement depend on the surrounding substrates, as it turns out (Figure 5). When confined in submicron interlayers, the PDMS becomes more lossy as compared to its bulk counterpart, and, depending on the confining stiff material, it also either slightly stiffens or notably softens; when glass constitutes the confining substrates, PDMS becomes softer than in the case of the silicon substrates. Further, the confinement has a greater impact in the loss factor than in the stiffness. A logical explanation to these observations lies in the alteration of the size distribution of the dangling chain structures inside the developed network. Larger dangling structures undergo slower dynamics, that is, they exhibit longer relaxation times, which shifts the dynamics towards lower frequencies. This means that the elastomer will present its high loss factor values, seen at high frequencies in the bulk samples (see Figure 10), at lower frequencies when confined. Moreover, the soluble material present in the elastomeric network may be increased providing with additional relaxation and further enhancing the damping capacity of the elastomer while simultaneously reducing its modulus.

Figure 5 shows how well the trends of the stiffness and the loss factor as a function of the PDMS layer thickness are captured by the FEM simulations. The only notable exception to the general agreement between experiments and simulations is seen for the samples made with PDMS thickness close to the predicted optimal thickness, as discussed above. But even though the experiments and simulations agree reasonably well, the agreement is not absolute because of the intact simplistic assumptions, such as the assumption of perfectly homogeneous interlayers of well-defined thickness, which according to the discussion in section 3.1 and Figure 4c is not particularly accurate. Additionally, the assumption of thickness-independent properties of the compliant interlayers in thin constraint geometries seems also an oversimplification. Nevertheless, the comparison between the measurements and the predicted values is meaningful, it provides us with new and interesting insight and ideas about the properties of our comb-like elastomer upon confinement, and it reflects the practical capability of the proposed simulation-guided solvent-free fabrication route.

### 3.2.2. Comparison with existing materials and composites

Figure 7 shows the loss factor - stiffness Ashby map and the square root specific modulus - loss factor map for all of our fabricated composites, which mirrors Figure 1. For the silicon composite structures, the realized combinations of stiffness and damping remarkably overcome the classical limit in terms of the stiffness - loss factor 0.6 GPa, with a value of approximately 10 GPa achieved with a PDMS thickness of 300 nm. This is over sixteen times higher than the classic Ashby limit. For the glass composites, the limit is exceeded with a product of 5 GPa (over eight times higher than the classic limit) by the composites with 500 nm thick PDMS layers. These results are well above common monolithic materials and also above or in between some of the leading composite structures in the literature, see Figure 1. This significant achievement is principally reflected in the square root specific modulus - loss factor map where the fabricated Si/PDMS composites lie between the straight lines of constant material product of 100 $(Pa/kg/m^3)^{1/2}$ and 1000 $(Pa/kg/m^3)^{1/2}$, placing them among the highest rank. The scattering of the results for the glass/PDMS composites is narrower than for the Si/PDMS composites and they lie close to the line of 1000 $(Pa/kg/m^3)^{1/2}$.

Figure 7 shows materials selection maps (see also Figure 1). a) Loss factor - elastic modulus Ashby map with dark grey and light grey diamonds for our silicon and glass composites, respectively. b) Square root specific modulus - loss factor map of the realized silicon and glass composites. The displayed mechanical properties of our Si/PDMS and glass/PDMS are taken from the dynamics 3PB measurements conducted at room temperature at 1 Hz.

It should be particularly emphasized that the striking combinations of stiffness and damping of our composites are maintained over a wide range of frequencies and temperatures. A few selected composites from those shown in Figure 7 were also studied in both temperature and frequency modes of our mechanic dynamic analysis tests. The composite structures exhibit a stiffness - damping product above approximately 2 GPa for the whole range of frequencies and temperatures examined (from -50 °C to 100 °C at 1 Hz and 0.007 Hz to 10 Hz at 21 °C, see section S9). And the composite structures also notably outperform the results shown in Figure 7 at low temperatures or high frequencies. Unlike numerous traditional composite structure treatments, the composite structures fabricated in this work do not rely on any phase transition, a characteristic which makes them operative in a broad temperature and frequency range; their viscoelastic properties can be further tuned by the architectural molecular design of the viscoelastic network [33,34,50,51]. Additionally, even though the stiffness of the fabricated composite structures does not exceed the stiffness of the constituent materials, which is possible in the case where a phase transition is present [13], our best achieved loss factors are higher than those of the constituent materials due to the synergetic effect of the viscoelastic nature of the specially synthesized elastomer, its confinement into thin interlayers, and the high shear deformations developed inside them. Our results evidence that a carefully designed simple composite structure combined with a prudent selection of materials leads to a remarkable and distinctive combination of stiffness and damping characteristics.

## 4. Conclusions

The demand for advanced materials that serve both a structural and a vibration damping function is evergrowing. Stiffness, however, competes with damping by nature, thereby imposing a physical limit in terms of the stiffness - damping product. Also, when it comes to applications, a lightweight material is priceless and frequently simply indispensable. Here, guided by a finite element design analysis, we escape the classical Ashby limit for mechanical damping - stiffness trade-off by realizing lightweight viscoelastic composite structures with specially synthesized viscoelastic comb-like PDMS interlayers of submicron thickness. The potent energy dissipation achieved by the architectural control of the elastomer molecular network works in synergy with amplified transverse shear deformations that develop within the viscoelastic interlayers upon bending to enhance the damping performance of the composite structures. The composite structures are produced by means of an unconventional but easy fabrication route whose novel fundamental idea is the diffusion of the catalyst precursors into the reactive solvent-free PDMS interlayers.

The concept of combining a stiff low-loss material with a small amount of a compliant high-loss material has long been proposed [22], but has yet to be deployed until now. One of this work's major achievements is the realization of submicron thin and fine solvent-free PDMS interlayers, with minute volume fractions of the order of $10^{-3}$, which act both as adhesive and as damping component. It was demonstrated by reverse-engineered FEM simulations that upon confinement into thin films the properties of the PDMS interlayers depend on the adjacent substrates. Our best composite structures, silicon composite structures fabricated to have 150 nm and 300 nm PDMS interlayer thicknesses, exhibit a modulus of 130 GPa and 76 GPa, i.e. like grey cast iron and aluminum [52], respectively, but a loss factor of 0.05 and 0.14, which exceeds that of these common metals by several orders of magnitude. Moreover, the remarkable combinations of high stiffness and high damping are realized over broad temperature and frequency ranges; and the attained combinations become even more remarkable at low temperatures or at high frequencies. Apart from the achieved unconventional combinations of stiffness and damping, the beauty of this work lies in its technological simplicity and versatility. We therefore surmise that both the presented results and the proposed novel fabrication route just barely scratch the surface of the great potential of highly stiff and highly lossy advanced lightweight materials needed in a variety of different applications such as high-speed surface imaging, soft-lithography for microfluidic devices, microelectromechanical systems (MEMs), high-quality sound reproduction systems, and multifunctional intergraded mechanostructures [53]. Furthermore, high stiffness combined with high damping capacity may be correlated to toughness [54]. Even though a direct relation between impact and vibration energy dissipation is absent, a good correlation has been demonstrated [55] and, therefore, our design and fabrication approaches may also pave the way towards new composite structures enriched with the functionality of toughness.

## References

[1] S. P. Balch, R. S. Lakes, Funct. Mater. Lett. 2015, 08, 1550059.
[2] E. Baravelli, M. Carrara, M. Ruzzene, in Heal. Monit. Struct. Biol. Syst. 2013 (Ed.: T. Kundu), 2013, p. 86952K.
[3] J. Meaud, T. Sain, B. Yeom, S. J. Park, A. B. Shoultz, G. Hulbert, Z. D. Ma, N. A. Kotov, A. J. Hart, E. M. Arruda, A. M. Waas, ACS Nano 2014, 8, 3468.
[4] I. C. Tsimouri, S. Montibeller, L. Kern, P. J. Hine, R. Spolenak, A. A. Gusev, S. Danzi, Compos. Sci. Technol. 2021, 208, 108744.
[5] A. Treviso, B. Van Genechten, D. Mundo, M. Tournour, Compos. Part B Eng. 2015, 78, 144.

[6] W. Woigk, K. Masania, F. Stork, A. Heusi, E. Poloni, A. R. Studart, ACS Appl. Polym. Mater. 2020, 2, 3557.

[7] W. Woigk, E. Poloni, M. Grossman, F. Bouville, K. Masania, A. R. Studart, Proc. Natl. Acad. Sci. 2022, 119, 1.

[8] A. P. Unwin, P. J. Hine, I. M. Ward, M. Fujita, E. Tanaka, A. A. Gusev, Sci. Rep. 2018, 8, 1.

[9] N. Ni, Y. Wen, D. He, X. Yi, T. Zhang, Y. Xu, Compos. Sci. Technol. 2015, 117, 92.

[10] J. D. Adams, B. W. Erickson, J. Grossenbacher, J. Brugger, A. Nievergelt, G. E. Fantner, Nat. Nanotechnol. 2016, 11, 147.

[11] R. S. Lakes, J. Compos. Mater. 2002, 36, 287.

[12] M. Brodt, R. S. Lakes, J. Compos. Mater. 1995, 29, 1823.

[13] T. Jaglinski, D. Kochmann, D. Stone, R. S. Lakes, Science (80-. ). 2007, 315, 620.

[14] K. Hu, W. Cardenas, Y. Huang, H. Wei, R. Gaskell, E. Martel, M. Cerruti, T. Szkopek, Adv. Funct. Mater. 2022, 32, 2107167.

[15] M. Colloms, P. Darlington, High Performance Loudspeakers: Optimising High Fidelity Loudspeaker Systems, Wiley, 2018.

[16] D. G. Nielsen, F. T. Agerkvist, J. S. Jensen, J. Acoust. Soc. Am. 2021, 150, 663.

[17] Y. F. Dufrêne, T. Ando, R. Garcia, D. Alsteens, D. Martinez-Martin, A. Engel, C. Gerber, D. J. Müller, Nat. Nanotechnol. 2017, 12, 295.

[18] A. A. Gusev, Int. J. Solids Struct. 2017, 128, 1.

[19] J. N. Reddy, Theory and Analysis of Elastic Plates and Shells, CRC Press, 2006.

[20] R. M. Christensen, Theory of Viscoelasticity, Elsevier, 1982.

[21] C. P. Chen, R. S. Lakes, J. Mater. Sci. 1993, 28, 4288.

[22] C. P. Chen, R. S. Lakes, J. Mater. Sci. 1993, 28, 4299.

[23] B. Liu, X. Feng, S. M. Zhang, Compos. Sci. Technol. 2009, 69, 2198.

[24] J. Meaud, G. M. Hulbert, J. Compos. Mater. 2013, 47, 3237.

[25] L. H. Sperling, in Sound Vib. Damping with Polym., 1990, pp. 5-22.

[26] B. C. Chakraborty, D. Ratna, in Polym. Vib. Damping Appl., 2020, pp. 143-201.

[27] J. Huang, Y. Xu, S. Qi, J. Zhou, W. Shi, T. Zhao, M. Liu, Nat. Commun. 2021, 12, 3610.

[28] K. Urayama, T. Miki, T. Takigawa, S. Kohjiya, Chem. Mater. 2004, 16, 173.

[29] K. Urayama, J. Polym. Sci. Part B Polym. Phys. 2006, 44, 3440.

[30] J. W. Krumpfer, T. J. McCarthy, Langmuir 2011, 27, 11514.

[31] L. H. Cai, T. E. Kodger, R. E. Guerra, A. F. Pegoraro, M. Rubinstein, D. A. Weitz, Adv. Mater. 2015, 27, 5132.

[32] M. Vatankhah-Varnosfaderani, W. F. M. Daniel, M. H. Everhart, A. A. Pandya, H. Liang, K. Matyjaszewski, A. V. Dobrynin, S. S. Sheiko, Nature 2017, 549, 497.

[33] S. S. Sheiko, A. V. Dobrynin, Macromolecules 2019, 52, 7531.

[34] H. Yamazaki, M. Takeda, Y. Kohno, H. Ando, K. Urayama, T. Takigawa, Macromolecules 2011, 44, 8829.

[35] K. Urayama, K. Yokoyama, S. Kohjiya, Macromolecules 2001, 34, 4513.

[36] H. Teisala, P. Baumli, S. A. L. Weber, D. Vollmer, H. J. Butt, Langmuir 2020, 36, 4416.

[37] R. D. Adams, Ed. , Adhesive Bonding, CRC Press, 2000.

[38] K. Henttinen, T. Suni, in Handb. Silicon Based MEMS Mater. Technol., Elsevier, 2015, pp. 591-598.

[39] G. Toikka, G. M. Spinks, H. R. Brown, J. Adhes. 2000, 74, 317.

[40] D. D. L. Chung, Composite Materials, Springer London, London, 2003.

[41] J. L. Lenhart, P. J. Cole, J. Adhes. 2006, 82, 945.

[42] "COMSOL - Software for Multiphysics Simulation," can be found under https://www.comsol.com/, n.d.

[43] Y. Nakajima, S. Shimada, RSC Adv. 2015, 5, 20603.

[44] T. Galeandro-Diamant, M. L. Zanota, R. Sayah, L. Veyre, C. Nikitine, C. De Bellefon, S. Marrot, V. Meille, C. Thieuleux, Chem. Commun. 2015, 51, 16194.

[45] K. Urayama, T. Kawamura, S. Kohjiya, Polymer (Guildf). 2009, 50, 347.

[46] V. G. Vasiliev, L. Z. Rogovina, G. L. Slonimsky, Polymer (Guildf). 1985, 26, 1667.

[47] W. Caseri, P. S. Pregosin, Organometallics 1988, 7, 1373.

[48] S. Omairey, N. Jayasree, M. Kazilas, SN Appl. Sci. 2021, 3, 769.

[49] P. J. Steinbild, R. Höhne, R. Füßel, N. Modler, NDT E Int. 2019, 102, 114.

[50] V. G. Reynolds, S. Mukherjee, R. Xie, A. E. Levi, A. Atassi, T. Uchiyama, H. Wang, M. L. Chabinyc, C. M. Bates, Mater. Horizons 2020, 7, 181.

[51] B. Park, J. H. Shin, J. Ok, S. Park, W. Jung, C. Jeong, S. Choy, Y. J. Jo, T. Il Kim, Science (80-. ). 2022, 376, 624.

[52] P. E. Schweitzer, Metallic Materials, CRC Press, 2003.

[53] W. Wu, R. Xia, G. Qian, Z. Liu, J. Razavi, F. Berto, H. Gao, Prog. Mater. Sci. 2023, 131, 101021.

[54] W. Huang, M. Shishehbor, N. Guarin-Zapata, N. D. Kirchhofer, J. Li, L. Cruz, T. Wang, S. Bhowmick, D. Stauffer, P. Manimunda, K. N. Bozhilov, R. Caldwell, P. Zavattieri, D. Kisailus, Nat. Mater. 2020, 19, 1236.

[55] M. O. Saed, W. Elmadih, A. Terentjev, D. Chronopoulos, D. Williamson, E. M. Terentjev, Nat. Commun. 2021, 12, DOI 10.1038/s41467-021-27012-1.

Supplementary information

S1. Passive strategies for stiff and damping composites

A common simple practice towards highly damping materials incorporates a polymer matrix reinforcement with stiff micro- and nano-scale fillers such as fibers, platelets, and particles. The damping in such composite structures is mainly attributed to the viscoelastic nature of the matrix and the interfacial friction between the matrix and the weakly bonded fillers [1-4]. To improve damping, usually the rigid reinforcing elements are coated with a viscoelastic compliant material with relatively low glass transition temperature [1]. Nevertheless, highly lossy composite structures of this kind are not very stiff (the elastic modulus does not exceed 10 GPa) because of the usually compliant matrix combined with the relatively low volume fraction of the stiff elements [1,4]. On the other hand, plastics reinforced with long fibers are very stiff, but they have low viscoelastic damping because of the insufficient interfacial area, as well as the reduced matrix volume fraction [4-6]. Recently, bio-inspired composite structures of a polymer matrix reinforced with stiff oriented platelets containing bridges and asperities have been realized, whose properties fall somewhere in between those of the polymer matrix composite structures reinforced with particle and fibers [7]. This is yet another demonstration of the classic trade-off between stiffness and damping.

S2. Constrained layer damping mechanism

Typically, in the constrained layer damping the viscoelastic material has a Young's modulus many orders of magnitude lower than that of its adjacent materials. Due to stress continuity, the stresses each layer experiences should be comparable and therefore the strains or the deformations within the viscoelastic layer are gigantic as compared to those of the adjacent stiff layers. It is these amplified shearing oscillations in the viscoelastic layers that causes enhanced mechanical energy dissipation into the thermal microscopic motion of the polymer chains [8,9] during the vibration of the structure [10-13].

S3. Experimental methods

Materials: A commercial randomly functionalized polydimethylsiloxane copolymer trimethylsiloxane terminated (PDMS-H, 0.5-1.5% mol/mol Si-H groups, kinematic viscosity 5000 cSt - 8000 cSt and density 0.97 g/cm$^3$, according to the supplier), that provides the backbone chains, was purchased from Gelest Inc. (Frankfurt, Germany). As cross-linking chains, a commercial bifunctional vinyl terminated polydimethylsiloxane (b-PDMS28000-V, kinematic viscosity 1000 cSt and density 0.97 g/cm$^3$) was purchased from ABCR (Karlsruhe, Germany). Finally, the side chains were comprised of a commercial monofunctional vinyl terminated polydimethylsiloxane (m-PDMS15000-V, kinematic viscosity 500 cSt and density 0.97 g/cm$^3$), purchased from Gelest Inc. (Frankfurt, Germany). The average number ratio of the Si-H functional groups to the unfunctionalized groups of the backbone chains was confirmed to be about 0.7 % (within the ratio given by the manufacturer) by integrating the signal intensities of the methyl and the Si-H groups from proton nuclear magnetic resonance spectroscopy, $^1$H NMR (in CDCl$_3$, the spectra were recorded with a Bruker AV 300 Hz (Billerica, MA) spectrometer). This corresponds to around five Si-H functional groups per backbone chain, f = 5. The number average molar mass of the cross-linking chains, Mn, was determined using $^1$H NMR and gel permeation chromatography, GPC, as described previously [14]. The silicon wafers (Prime FZ-Si wafer 4 inch, thickness = 200 $\mu$m $\pm$ 10 $\mu$m, (100), 2-side polished) were purchased from MicroChemicals (Ulm, Germany), while the borosilicate glass D 263$^®$ M cover slips (60 mm $\times$ 24 mm) with thickness of 0.13 mm - 0.16 mm were purchased from Faust, Switzerland. Their surface roughness was measured using AFM (NTEGRA AFM from NT-MD Spectrum Instruments, Russia). The RMS roughness (Rq) was 0.123 nm and the peak-to-valley roughness (Rt) was measured to be 10.64 nm for the silicon, and Rq was 0.203 nm and Rt was 2.38 nm for the glass substrate, for a 10 $\mu$m $\times$ 10 $\mu$m sampling area (Figure 8).

Figure 8 depicts AFM images of the stiff substrates, a) Silicon, and b) glass. Elastomer synthesis (bulk samples): A typical preparation of the PDMS melt includes a mixture of 1.3 g of PDMS-H with 1.2 g of m-PDMS15000-V and 0.54 g of b-PDMS28000-V in a closed glass vial equipped with a magnetic stirrer at room temperature for at least 2 days. The required amount of both m-PDMS15000-V and b-PDMS28000-V was defined by the target stoichiometric imbalance between the total vinyl (side and cross-linking chains) and the Si-H reactive groups, r = (vinyl groups)/(Si-H groups) = 1, which was directly determined by two $^1$H NMR measurements by means of the integrated intensities of the two hydrogen atom signals of the two reactive groups. However, the exact amount of each one of them was chosen such that the two partial ratios are ca. rsc = (vinyl groups$_{sc}$)/(Si-H groups) = 0.58 and rcl = (vinyl groups$_{cl}$)/(Si-H groups) = 0.42. These partial stoichiometric imbalances correspond to a network of backbone chains with three side chains free to move by one of their ends, and two cross-linking chains to connect to the network. The catalyst solution was prepared by dissolving a few mg of the yellow catalyst powder, cis-[PtCl$_2$(styrene)$_2$] [15], a particularly active hydrosilylation catalyst synthesized as described previously [16], in toluene, to obtain a solution of 0.0025 g/mL. A homogeneous catalyst solution was obtained by ultrasonication for 40 min. To synthesize the bulk elastomer using the conventional way, 33 mg of the catalyst solution were added to the vial with the PDMS melt, to yield a mass ratio of 30 ppm of the Pt'' complex relative to PDMS (backbone, side and cross-linking chains). After 2 min of vigorous stirring, the mixture was poured in a glass Petri dish (diameter 3.5 cm), whose bottom was carefully covered with an aluminum foil to avoid the strong adhesion of the finally formed product to the glass of the Petri dish. The Petri dish was placed inside a desiccator under a slight N$_2$ flow at room temperature for 1 day, leading to monolithic samples of ca. 3.5 mm thickness.

To synthesize the bulk elastomers using the unconventional fabrication route proposed in this work, a larger amount of the catalyst solution was used (various amounts were used, see Figure 9). First, the amount of catalyst solution was drop-casted on the bottom surface of the Petri dish. After the evaporation of toluene, the same amount of the PDMS melt as in the conventional way was poured in the Petri dish whose bottom was covered with the catalyst precursor (yellow to orange powder on top of the aluminum foil) to obtain a ca. 3.5 mm thick monolithic sample (when other thicknesses were obtained, the quantities of the reagents were adjusted proportionally). It should be mentioned that the known coffee ring effect [17] after toluene evaporation was present and as a result the catalyst precursors were mainly concentrated along the circumference of the Petri dish bottom surface. However, toluene does not have a fast evaporation rate, leaving concentrated catalyst particle edges, obvious to a naked eye, on the whole bottom surface. In addition, the excess of catalyst facilitated its diffusion, which compensated for inhomogeneous catalyst concertation. The reaction time for each of these samples was determined as the time when the sample could be completely removed from the Petri dish without any apparent liquid phase, which implies the full solidification and thereby the curing termination.

Extraction of the Soluble Material: The weight fraction of the soluble material, $W_{sol} = (m_i - m_f)/m_i$, where $m_i$ and $m_f$ are the masses of the dry samples before and after the extraction, respectively, was measured by extraction experiments as described previously [18]. Briefly, three out of four pieces of the prepared cylindrical network samples were weighted to obtain the initial mass mi and afterward swollen in toluene for 1 week. The solvent was discarded, the pieces were weighted, and the toluene was renewed daily. When the mass of the swollen sample became constant, the sample pieces were left to dry in open air until their masses remained unchanged with time. To finally obtain $W_{sol}$, the pieces were weighted to measure the final mass $m_f$. The three different pieces of the same polymer sample resulted in similar weight fractions of the soluble material in all the examined systems designating consistency and reproducibility.

Elastomer mechanical properties: The mechanical properties of the bulk PDMS samples were measured in two different ways. Dynamic, small scale oscillatory, measurements were carried out in compression, while the elasticity of the samples was measured from a uniaxial tensile measurement.

Uniaxial stress-strain measurements were carried out using an Intron 550 Extra tensile tester. Rectangular strips were prepared to a thickness of 5 mm, a width of 8 mm and a length of 100 mm. After clamping the gauge length was 50 mm. The extension rate for the tests was 10 mm/min.

Dynamic compression tests (using a Discovery DMA850) were carried out on bulk PDMS samples (3 mm thick) sandwiched between two aluminum discs (20 mm diameter and 2 mm thick). The test frequency was 1 Hz, the test temperature was 21 °C and the oscillatory strain was 1%.

Substrates cleaning and activation: The nominally 0.2 mm thin silicon wafers were diced with an automatic dicing saw (DAD3221, DISCO) into 55 mm long and 5 mm wide strips. The borosilicate glass D 263® M cover clips (with nominal thickness of 0.15 mm) were diced into 60 mm long and 8 mm wide strips. Each strip was thoroughly cleaned by ultrasonication in isopropanol, ethanol, methanol, and deionized water consecutively (10 min each). The surface of the cleaned strip was activated by an air plasma (Plasma Cleaner PDC-32G, Harrick Plasma) treatment for 30 min (highest RF level, 18 W). Immediately after the plasma treatment, the activated strips were used for the fabrication of the composites.

Composites fabrication: The fabrication route is briefly summarized in Figure 4 of the main text. To fabricate a typical five-layered composite, three strips of the same stiff material were placed on a flat clean table. 50 $\mu$L of the catalyst solution (0.000025 g/mL in toluene) were drop-casted on two out of the three top surfaces of the strips. This corresponds to a very small amount of the catalyst precursor powder to be dispersed over the substrate surface, an amount equivalent to a mass ratio of 120 ppm of the Pt'' complex relative to PDMS. 20 $\mu$L of the PDMS solution (mass fraction of 0.005, in hexane) were carefully and slowly spread on the third strip surface with a pipette along its length. This amount of polymer (and the analogous catalyst) corresponds to 300 nm elastomer layer thickness, assuming full coverage and homogeneous thickness (when other elastomer layer thicknesses were needed, the amounts were adjusted proportionally). Because of the high evaporation rate of hexane, as well as the chosen solution concentration, all the solvent evaporated rapidly upon deposition, leaving the PDMS melt nicely spread on the surface without any coffee ring effect present, while coffee rings were present along the substrate surface after the evaporation of toluene of the catalyst solution. The deposited PDMS films were visible on the silicon substrates due to the thin film layer interference. Further, the activated surfaces of the substrates have high specific surface energy, and therefore both, the solution of catalyst precursors and the solution of PDMS network precursors, which have low surface tension, effectively wet the substrates. After the solvent had been completely evaporated from all three surfaces, the strip with the PDMS melt was carefully turned 180° degrees for the PDMS melt to meet the catalyst as shown in Figure 4. Afterwards, on the back surface of the strip that carried the PDMS melt, 20 µL of the PDMS solution were deposited in the same way as described above. Then, the second strip with the catalyst was carefully turned by 180° degrees for the catalyst to meet the PDMS melt. Finally, following the alignment of the layers and a little bit of pressure by hand, the whole composite structure was placed between two square titanium plates covered by soft PVC tape, a home-built stage. The whole stage was finally placed under a Perkin-Elmer Hydraulic press. The press screw was tightly pressing the titanium plates together without any additional hydraulic pressure. The stage remained in the press overnight. After this pressing step, the composite was safely stored for measurements.

PDMS thickness measurements: A few prepared composite structures were cut (by the dice saw used to cut the silicon wafers, see above) at both their ends (Figure 4b) leaving two approximately 7 mm long pieces of each composite for thickness measurements. These pieces were cross-sectioned on their cut side using a broad ion beam (BIB) cross-section milling system (Hitachi IM4000 Ion Milling System) without applying mechanical stress to the sample. This was done to prepare the sample surfaces for SEM with high quality. The advantage of this kind of cross-section milling over the commonly used focused ion beam systems is that it produces wider cross sections and therefore more measurements on the same sample. After the cross sectioning, the thickness of each PDMS layer in each piece was measured using SEM at several points across its width direction, which were averaged to obtain a statistical error (see Figure 4c). For the SEM studies, the samples were coated by 6 nm platinum coating (CCU-010, Safematic).

Mechanical properties of the composite structures: The dynamic properties of the composite structures were measured using a three-point bend geometry and using a Discovery DMA850. The bending span was 50 mm, and the samples were 5 mm wide and 0.60 mm thick. All tests were carried out using a suitable preload (0.58 N for the Si/PDMS composite structures and 0.13 N for the glass/PDMS composite structures) and then an oscillatory strain of 0.01% was applied. These choices ensured that the measurements correspond to the linear regime. Single tests were carried out at a frequency of 1 Hz and a test temperature of 21 °C. Frequency scans were carried out at a fixed temperature of 21 °C, over a frequency range from 0.007 Hz to 10 Hz, while temperature scans were carried out using a fixed frequency of 1 Hz and a temperature range from -50 °C to +100 $\pm$ °C in 2 °C steps.

S4. Bulk comb-like elastomer properties

Our analysis suggests submicron viscoelastic interlayers, which are difficult to fabricate because of the oblong surface of the stiff substrates, and it becomes even more difficult to fabricate while keeping a solvent-free curing. Typically in the silicone industry, hydrosilation of alkenes, the curing reaction for the production of silicone elastomers, is catalyzed by homogeneous platinum complexes dissolved in toluene to facilitate mixing [19,20]. However, there is spectroscopic evidence that mononuclear platinum species are the active intermediates in the catalytic cycle, making the platinum complex a precursor to the catalyst rather than the catalyst itself [21]. Thus, our idea is to exploit the diffusion of the catalyst species, which is anticipated to be fast due to the smaller size of the catalyst molecules relative to the size of the macromolecular chains, into the PDMS melt for the reaction to take place after solvent evaporation. We, therefore, fabricate the PDMS interlayers by depositing separately the two solutions, the catalyst solution and the PDMS solution, on the substrates, followed by solvent evaporation. To verify this hypothesis, bulk PDMS rubber samples were prepared according to the conventional and the proposed method, as illustrated in Figures 9a and 9b. It was found that a higher amount of catalyst should be used in the samples prepared with the method proposed in this work (about four times more is sufficient) probably because not all catalyst particles diffused from the bottom throughout the whole melt, or their diffusion was too slow, or maybe because of side reactions providing catalytically inactive species in absence of solvent. Consequently, to facilitate the cross-linking reaction, more catalyst was deposited on the bottom of the Petri dish in which the sample was prepared. Three samples were prepared according to the suggested approach by varying the catalyst amount and compared with a rubber prepared with the conventional way by using the same catalyst. Hereby, the catalyst was deposited on the bottom of a Petri dish and the mixture of the PDMS components was carefully poured on top of the solid catalyst, to yield samples of about 4 mm in thickness (Figures 9a and 9b). All the samples were relieved of their unreacted soluble material as previously describe [14], which was in turn weighed for the comparison (Figure 9c). The soluble material weight fraction, $W_{sol}$, of a network is sensitive to its topology [14], and it has long been established that the topology of a network controls its mechanical properties [18,22-26]. Consequently, $W_{sol}$ serves as a good indicator for changes in both the topology of the network and its mechanical properties.

Figure 9a depicts the conventional pathway and Figure 9b depicts the proposed route for fabricating the PDMS elastomers through diffusion of catalyst species into the PDMS melt. Figure 9c depicts the weight fraction of the soluble material as obtained from samples prepared with the conventional and proposed fabrication routes. The latter were achieved by varying the catalyst amount (120 ppm, 150 ppm, and 300 ppm) and the sample thickness to provide evidence that the method is reliable, and the resulting properties remain unaffected. Figure 9d depicts the approximate time required for the complete curing against the thickness of the final cured samples. The thickness dependency of the reaction time is correlated to the diffusion time of the catalyst precursors. Figure 9e depicts an SEM image of a PDMS interlayer prepared to have a thickness of 600 nm, according to the volume and concentration of the PDMS precursor mixture deposited during fabrication.

Figure 9c clearly shows that the preparation method, as well as the amount of the Pt$^{II}$ complex (as long as it is present in sufficient quantity for the reaction), do not affect the topology, and, by extension, the mechanical properties of the elastomer networks, validating our hypothesis. Additionally, three bulk rubber samples were prepared according to the suggested approach with a catalyst amount four times larger than in a conventional approach, as discussed above, and the time needed for the complete curing of their network was documented as the time where no apparent liquid interface between the sample and air was present (this constitutes a rough estimate of the reaction time). Figure 9d shows that the required time needed for the cross-linking reaction to terminate is proportional to the squared of the thickness of the rubber samples, like the diffusion time, implying that the diffusion of catalyst species within the melt determines the curing. Of course, this approach is most valuable in preparing thin layers because of the time needed for the catalyst to diffuse into the PDMS melt as well as the required catalyst amount. Finally, the thickness of five PDMS interlayers of three different Si/PDMS composites prepared to have 300 nm PDMS layers is shown in Figure 4c. To show that the method also applies to thicker layers, Figure 9e shows a PDMS interlayer measured by SEM images with an expected thickness of 600 nm. The measurement obtained somewhat larger value, which however is within the expected range.

The viscoelastic properties of the as prepared (unextracted) bulk PDMS samples of final thickness after curing of about 5 mm prepared with 120 ppm catalyst prepared with the proposed route were obtained from compression experiments over a broad range of frequencies (0.007 Hz - 10 Hz) at room temperature (Figure 10). Since our comb-like elastomers do not rely on the glass transition, substantial deviations of the modulus are not observed with increasing frequency (or decreasing temperature due to the time-temperature superposition). An increase in frequency over three orders of magnitude results in an only just about 30% increase in stiffness, while the loss factor increases about 2 times. This frequency and temperature dependency is considered to be weak because it is obtained over a frequency span of three orders of magnitude. For comparison, typical elastomers based on their glass transition utilized to improve damping exhibit around two orders of magnitude increase in stiffness and one order of magnitude drop in loss factor with increasing frequency over the narrow range of the transition (see for example Chapter 3 in reference 27 [27]). Instead, what prompts the highly viscoelastic behavior of our comb-like elastomer lies at the broad relaxation spectra of the dangling and free structures in its 3D network.

The samples are quite stretchable, with a lower limit of the extension at break measured to be at around 150%. The cylindrical samples were cut in strips, which introduces defects along the sample edges and causes stress concentration at these points. As a result, the samples were very susceptible to cracks on the edges, and this impeded us from accurately measuring the extension at break of our elastomer. However, the maximum extension reached when tested by bare hands suggested that the materials should withstand the high deformations upon vibration bending.

Figure 10 depicts the storage shear modulus and loss factor as a function of frequency for bulk PDMS samples prepared with the route proposed in this work. The measurements were conducted at room temperature in compression.

## S5. FEM Simulations methods

Design simulations: Viscoelastic free vibration FEM simulations were performed in the eigenfrequency domain using the structural mechanics module of COMSOL Multiphysics, to analyze the behavior of multi-layered strips in terms of the damping capacity. Additionally, simple static FEM simulations in the same module were performed to examine the behavior in terms of the bending stiffness. The two kinds of simulations were necessary to obtain the design curves (Figure 3b), that is the relative damping time and the relative bending stiffness as a function of the thickness of the viscoelastic layers, in order to determine the most advantageous layout that results in high damping accompanied by a minimal reduction in stiffness. The dimensions of the composite structures were the same as in the experiments. The output quantities obtained were the reciprocal of the imaginary part of the fundamental frequency, $\tau$, (from the eigenfrequency model) and the bending stiffness, K, (from the stationary model), i.e., the ratio of the applied load to the displacement in the z direction, taken as an average over the top surface of the composite structure. Both 3D models were meshed with quadratic Lagrangian brick-element meshes (as illustrated in Figure 6). Typically, the composite structures had five elements in the width direction or thicknes direction and $600 \cdot L = 30$ elements in the length direction, where $L = 0.05$ m is the length of the composite structure with respect to a transverse direction of the composite structure running perpendicularly to a thickness direction of the composite structure. Finally, in the thickness direction, each layer had four elements. The stiff layers were simulated with a standard linear elastic model, while the PDMS layers were simulated with a linear elastic model in which a mixed strain formulation was used because of the near-incompressible nature of the material. In the eigenfrequency calculations, the complex moduli were used for both materials to simulate damping (see next subsection). Overall, the memory and computing time for these design simulations were not demanding. When the viscoelastic volume fraction was very small, $h_{PDMS} < 100$ nm, the thin elastic layer approximation was used since the corresponding PDMS thickness was significantly thinner compared to the surrounding layers. The solver in these simulations was the multi-frontal direct sparse complex arithmetic MUMPS. The boundary conditions were simplified to resemble those of simply supported strips, where the bottom left edge was completely fixed while the bottom right edge was fixed in both the y- and z-directions (Figure 3a). In the bending simulations, a total load of 0.8 N was applied.

Reproduction simulations: Dynamic three-point bending test FEM simulations were conducted in the time domain using the structural module of COMSOL Multiphysics. The 3D model comprised of the composite structure in the form of a strip, two cylinders made of steel and one knife also made of steel (see Figure 6). The nominal dimensions of the composite structure in the form of the strip were the same as they were in the experiments. The knife had two parts: a brick on top, so that there was an area to apply the displacement and a half cylinder on the bottom, so that the knife meets the strip in the middle covering the whole width (Figure 6). The radius of the cylinders was taken as L/30, while the radius of the cylindrical part of the knife was half of it, i.e., L/60. The brick part of the knife had the thickness of L/30, its length at the bottom was adjusted to the dimensions of the half cylindrical part at L/30, while its length was linearly increased up to approximately L/25. The effective length of the strip was 50 mm with additional 6.5 mm on each side that stand out of the cylinders (Figure 6), mimicking the real experimental setup.

To increase the accuracy and decrease the simulation time, we used symmetry in the model, and therefore only half (in the width direction) of the setup was simulated. The composite structure was meshed with quadratic Lagrangian brick elements similar to the design simulations. Typically, the model had five elements in the width direction (the width was half of the real size), eighty elements along the effective length and four on each additional length, while in the thickness direction each stiff layer had forty elements and each viscoelastic element had four elements. However, the number of elements in the thickness direction of the stiff and viscoelastic layers depended on the viscoelastic thickness, and as it will be described later also on its properties. The cylinders and the knife were meshed by free triangular elements. In all the simulations, quadratic serendipity elements were used, which led to about a million degrees of freedom. Here, viscoelastic PDMS layers were simulated as an incompressible hyperelastic material while the remaining stiff materials present in the model were simulated as linear elastic materials. Following the real experiment, a displacement of $w_i = 0.28$ mm was first prescribed on the upper rectangular surface of the knife (highlighted dark grey area in Figure 6) to simulate a 0.04% prestrain (step one) for the Si/PDMS composites. Then, a sinusoidal dynamic displacement was applied on the same surface, with an amplitude of w0 = 0.075 mm, equivalent to 0.01% strain amplitude, and a frequency of 1 Hz (step two). Similarly, the prestrain and the strain amplitude were $w_i = 0.21$ mm (0.03%) and w0 = 0.07 mm (0.01%), respectively, for the glass/PDMS composite structures. The time step was initially set to 0.01s, however, the solver was let free to adjust the time according to physics requirements.

The damping of the viscoelastic material was simulated using the viscous damping option in COMSOL Multiphysics, with $\eta b = 0$ and $\eta v = G' \cdot \tan\delta$, where $\eta b$ is the bulk viscosity, $\eta v$ the shear viscosity, and G' and $\tan\delta$ are the storage shear modulus and the loss factor of the PDMS as measured in this work at 1 Hz unless otherwise specified. For the stiff materials (glass or silicon) viscous damping was also used, with G' equal to the corresponding shear modulus of either glass or silicon, and a $\tan\delta$ of $10^{-4}$, a very small numerical value. In the simulations, no additional damping was accounted for (i.e. for the steel parts). At the end of the simulation, three quantities were considered over all the time steps: $\omega t$, w, and RF, where $\omega$ is the radial frequency, $\omega = 2\pi/f$, with f being the applied frequency in Hz, t is the time in s, w is the displacement field in the z direction in m measured at the midpoint of the top surface of the composite structure, and RF is the z component of reaction force calculated by a surface integration over the whole rectangular surface of the knife, i.e., where the displacement is applied (in dark grey, Figure 6), to compute the total force on that surface.

The output dynamic mechanical properties of the composite structure were obtained from each simulation using a MATLAB code, by fitting with a function of the form $RF_{fitting} = A\sin(\omega t+B)+C$, where the sum squared error cost function, $\sum(RF-RF_{fitting})^2$, was minimized to find the parameters A, B, and C (with $A_0$ = maximum RF, $B_0 = 0.2$, and $C_0 = 10^{-4}$ as initial guess). The storage (flexural) modulus of the composite was calculated afterwards as $E' = AL^3/(w_0 4WH^3)$, where L is the effective length of the composite between the cylinders (50 mm), W its width, and H the total thickness of the composite structure. Normally, there is an additional correction term for composite structure strips to this well-known expression for homogeneous strips. However, the additional term is proportional to $(H/L)^2$, which is in fact at the order of $10^{-4}$ because of our very thin composite structures (H < 1 mm). The loss factor was calculated as $\tan\delta = \tan(B)$. In the reproduction simulations, the memory and computing time were much more demanding than in the design simulation, and therefore, these simulations were run on a server. A typical simulation took about three to four hours and up to 40 GB virtual memory using 4 Intel Xeon Gold 6140 processors (2.3 GHz). The direct solver used was PARDISO.

The boundary conditions were more complicated here than in the design simulations. The left cylinder (Figure 6) was completely fixed, while the right cylinder had its upper boundary, that is the one in contact with the composite structure, simulated as a roller. This boundary condition constrains the displacement in a direction normal to the boundary. The cylinder's bottom edge, that is, the edge in contact with the ground level (dashed line, Figure 6), is fixed in y- and z-direction, while the displacement in the x-direction is let free. The setup and the boundary conditions of a reproduction simulation are shown in Figure 6, along with its mesh. Figure 11 shows the magnified displacement in z direction, for visual clarity, at the beginning, maximum and minimum applied displacements, and also at the end of a typical simulation.

Figure 11 depicts an illustration of the 3PB reproduction simulations. Four snapshots of the setup displacement taken at different time steps of a typical dynamic simulation showing the progression of a simulation dynamic cycle: the beginning of a period cycle (initial state), the moment where the applied sinusoidal deformation reaches its minimum amplitude (maximum deflection), the moment where the applied sinusoidal deformation reaches its maximum amplitude (minimum deflection), the end of a period cycle returning back to its initial state (final state). In the inlet box, the progression of both the applied dynamic displacement and the output total reaction force calculated over the surface of application (dark grey area in Figure 6) are depicted showing the phase lag between the two.

S6. Reverse-engineering of the confined properties of the comb-like PDMS

The design curves dictate an optimum viscoelastic interlayer thickness of about 300 nm for the Si/PDMS and of about 1000 nm for the glass/PDMS composite structures. Admittedly, the dictated interlayer thicknesses are close to the nanometer scale, which reasonably raises some concerns about the possibility of thickness-dependent mechanical properties. The impact of the confinement of polymers has been the focus of several studies, however, a converging conclusion was not yet reached [27-31]. Xu et al. [31] found that the modulus of elasticity of a commercial PDMS film significantly increased for PDMS thicknesses below 900 nm, while Li et al. [30] observed that the modulus of the same PDMS was commensurate with the bulk value for films above 600 nm. On the other hand, Molecular Dynamics simulations [29] have shown that the reinforcement effect, which was attributed to the slowing down of dynamics near the substrates, is rather small for thick and thin films (i.e., for thickness between $2.6R_g$ and $8R_g$, where $R_g$ is the radius of gyration of the polymer chains), but it is pronounced in the case of ultrathin films (i.e., for thickness equal to the radius of gyration). Our backbone chains have a molecular weight of about 55000 g/mol, which, to a first approximation, corresponds to a radius of gyration of 6 nm, since the ratio of the mean-square end-to-end distance of unperturbed and long linear PDMS chains, $<R^2>$, to their number average molar mass, $M_n$, is known to be equal to 0.42 Å$^2$/(g/mol) [32] and for ideal linear or branched chains $<R^2> / <Rg^2> = 6$, where $<Rg^2>$ is the mean square radius of gyration [33]. This means that a thickness of 300 nm is equivalent to $50R_g$, which would safely exclude major confinement effects. A recent review concluded that the confinement effects appear to depend on the measurement technique [34]. While for glassy polymers, several polymer characteristics that impact the confinement effects on the elastic modulus have been extensively examined, for rubbery materials this is more difficult because of the much lower modulus as well as the length scales associated with the measurements; some of them might also affect the behavior in rubbery polymers. For example, in one study, the addition of plasticizers to high molecular weight polystyrene (PS) thin film didn't change its viscosity, but the viscosity was decreased in low molecular weight PS, a phenomenon that was not observed in other studies where the suppression of nanoconfinement effects was independent of the molecular weight [34]. Apart from the presence of plasticizers, other factors may affect the confinement effects such as the interaction of the polymer with the substrates, the polymer architecture, and the developed strains within the polymer, which complicates the assessment of their impact on the mechanical properties. Consequently, to avoid any questionable assumptions, the bulk properties of the PDMS as experimentally measured in this work (G'≈ 22 GPa, tan$\delta$ ≈ 0.9) were used as input in our design simulations. This simple approach has also been successfully adopted by Unwin et al. to predict the viscoelastic properties of polystyrene/SIS composite blends [35]. However, due to the great uncertainty, we endeavored to reverse-engineer the properties of the PDMS upon confinement into thin layers for our reproduction simulations.

To discover the properties of the confined PDMS we reverse engineered the system by means of trial and error. In particular, numerous combinations of G'$_{PDMS}$ and tan$\delta_{PDMS}$ were tested as potential properties of PDMS in the reproduction simulations. The output storage modulus and loss factor of the composites were obtained, and the second residual norm with respect to the corresponding experimental values was calculated by

$$R = \sum_{\# \text{of exp.points}} \left( \frac{E'_{\text{FEM}} - E'_{\text{exp.}}}{E'_{\text{FEM}}} \right)^2 + \sum_{\# \text{of exp.points}} \left( \frac{\tan \delta_{\text{FEM}} - \tan \delta_{\text{exp.}}}{\tan \delta_{\text{FEM}}} \right)^2$$

The pair of properties resulting in the minimum R constituted an estimate to the properties of our PDMS upon confinement. First, we assumed that the properties of the PDMS upon confinement are substrate-independent and thickness-independent. Table S1 shows the properties that best fitted the data (in bold) under this assumption; G'$_{PDMS}$ =16 kPa and tan$\delta_{PDMS}$ = 0.33. However, these assumptions are inadequate to fit the experimental data (see Figure 5). Next, we assumed that the properties of PDMS upon confinement are substrate-dependent but still thickness-independent. The best sets of PDMS properties are presented in Tables S2 and S3. Obviously, the R values are now much smaller compared to the values obtained when substrate-independent properties were assumed. From these results, it is evident that the properties of the comb-like elastomer under thin confined geometries depend on the surrounding substrates. Possibly, the interfacial interaction between PDMS and glass is stronger compared to the interaction between PDMS and silicon, which could justify the more profound influence in the properties of the PDMS interlayers surrounded by glass. Moreover, the loss factor is more sensitive to the confinement. An explanation is given in the main text; confinement alters the molecular weight distribution of dangling and free structures in the network, which in turn shifts dynamics towards lower frequencies, as described in the main text (section 3.2.1). In addition to that explanation, the potential attachment of the soluble elements to the stiff substrates combined with their entanglement to the network may augment the relaxation phenomena magnifying the energy dissipation, and hence the loss factor.

Table S1. Calculated residual R when both silicon and glass composite structures are considered.

| $\tan\delta_{PDMS}$ / $G'_{PDMS}$ (kPa) | 0.24 | 0.33 | 0.42 | 0.54 |
|---|---|---|---|---|
| 20.000 | 9.431 | 5.194 | 5.423 | 6.910 |
| 16.000 | 8.776 | **4.624** | 5.196 | 6.794 |
| 12.000 | 9.661 | 5.338 | 5.699 | 7.210 |

Table S2. Calculated residual R when only the silicon composite structures are considered.

| $\tan\delta_{PDMS}$ / $G'_{PDMS}$ (kPa) | 0.18 | 0.21 | 0.24 | 0.27 |
|---|---|---|---|---|
| 28.000 | 2.236 | 1.642 | 1.681 | 1.970 |
| 24.000 | 2.243 | 1.609 | 1.650 | 1.934 |
| 20.000 | 2.292 | 1.708 | 1.786 | 2.073 |

Table S3. Calculated residual R when only the glass composite structures are considered.

| $\tan\delta_{PDMS}$ / $G'_{PDMS}$ (kPa) | 0.24 | 0.33 | 0.42 | 0.54 |
|---|---|---|---|---|
| 16.000 | 6.526 | 1.398 | 0.771 | 1.093 |
| 12.000 | 6.088 | 1.128 | 0.513 | 0.878 |
| 8.000 | 7.237 | 1.785 | 0.799 | 0.942 |

The overall good agreement between the experimental data and the FEM predictions implies that the underlying mechanism that triggers the effect of simultaneous stiffness and damping is primarily founded on the interplay between the adjacent materials and the nature of the viscoelastic phase. Evidently, the results suggest the failure of the alleged underlying micromechanics to describe composites comprised of the thin, highly lossy, and nearly incompressible submicron layers of the comb-like elastomer and mark the great potential of the presented approach to tackle the age-old challenge.

S7. Dynamic mechanical properties over several dynamic cycles

The flexural modulus and the loss factor of our composite structures were measured in three-point bending (3PB) to evaluate their dynamic performance. Discrepancies between the measured dynamic properties of each composite structure of the same PDMS layers thickness may be attributed to the imperfect control over the interlayer thickness, as described previously, particularly for the glass/PDMS composites where the visibility upon deposition is hindered due to the small refractive index mismatch between PDMS and glass. On the contrary, in Si/PDMS composite structures, the deposition of the PDMS solution on the silicon surface is visible because of their large refractive index mismatch, which, paired with the small film thickness, bring about the thin film interference effect. The average properties of all the tested composites are given in Table S4.

Table S4. Average dynamic properties of the silicon and glass composite structures measured in 3PB at 1 Hz and 21 °C for the examined PDMS thicknesses.

| | Si/PDMS | | | glass/PDMS | | |
|---|---|---|---|---|---|---|
| $h_{PDMS}$ (nm) | E' (GPa) | $\tan\delta$ | $h_{PDMS}$ (nm) | E' (GPa) | $\tan\delta$ | |
| 150 | $130 \pm 5$ | $0.05 \pm 0.01$ | 500 | $31 \pm 2$ | $0.15 \pm 0.03$ | |
| 300 | $76 \pm 6$ | $0.14 \pm 0.03$ | 1000 | $18 \pm 4$ | $0.22 \pm 0.05$ | |
| 600 | $52 \pm 2$ | $0.11 \pm 0.01$ | 1500 | $18 \pm 3$ | $0.21 \pm 0.01$ | |
| 900 | $29 \pm 5$ | $0.11 \pm 0.01$ | 2000 | $13 \pm 0.2$ | $0.21 \pm 0.03$ | |
| 1800 | $24 \pm 8$ | $0.1 \pm 0.01$ | - | - | - | |

To verify the integrity and the stability of the fabricated composite structures, we measured their dynamic properties at 1 Hz and 21 °C for 25 dynamic cycles consecutively (each measurement corresponds to 5 dynamic cycles). In particular, after each measurement, the sample was removed from the instrument, turned 180° along the length- or along the thickness-direction, and then put back in the DMA instrument for the next consecutive measurement. These measurements are also intended to test our approach to utilizing plasma activation as the adhesion mechanism to bind the stiff layers together with PDMS. Implicitly, a decrease in the modulus together with an increase in the loss factor with increasing dynamic cycle hints at delamination. Therefore, the overall constancy of the measurements (Figure 12) suggests strong adhesion and no presence of delamination even for the Si/PDMS with PDMS layers 150 nm in thickness, which are anticipated to suffer most from the highest strain magnifications because of the highest expected stiffness of the composite structure. An exception is seen for the Si/PDMS fabricated with 1800 nm thick PDMS layers which could be accidental.

Figure 12 depicts the Dynamic properties of the composite structures against the number of dynamic cycles. a) and b) Storage modulus and loss factor, respectively, for the Si/PDMS composite structures, and c) and d) Storage modulus and loss factor, respectively, for the glass/PDMS composite structures. The constancy of the properties for 25 cycles (5 cycles per measurements) suggests the absence of delamination and therefore hints at good adhesion.

S8. Static mechanical properties: insight from FEM simulations

To divulge and demonstrate the highly non-affine deformation that the composite structures experience upon bending, we calculated the highest transverse shear component of the Green-Lagrange strain tensor ($\varepsilon_{xz}$) inside the viscoelastic interlayers and at the interfaces between the viscoelastic interlayers and the stiff layers. We then divided these shear components with the overall flexural strains that the whole composite structure experiences under the applied mechanical load, $\varepsilon_f = 6w_{max}H/L^2$ [36], where $w_{max}$ is the maximum vertical deformation of the strip at its center, H is its total thickness and L its effective length. The ratio $\varepsilon_{xz}/\varepsilon_f$ represents therefore the magnification of the strains within the PDMS interlayers and at their interfaces with the adjacent stiff layers. The setup for these simulations was the same as the reproduction simulations but a static load was applied instead of a prestrain and no sinusoidal dynamic loading or displacement was used. Figure 13 shows that for several applied loads up to 1 N, where the flexural strain the composite structure experiences as a whole remains below 0.1%, the actual transverse shear strains developed inside the PDMS layer and at its interface with the stiff substrate are tremendously higher and even reaching 400 % ($\varepsilon_{xz}/\varepsilon_f \approx 10000$) at higher loads in the case of silicon substrates where the ratio $E_{stiff} / E_{PDMS}$ is high, where $E_{stiff}$ is the Young's modulus of the stiff substrate and $E_{PDMS} = 3G_{PDMS}$ is the Young's modulus of the PDMS. This is expected since in such kind of composite structures, also called Reuss, each layer carries the full load, which means that each material present in the structure will experience the same stresses. However, since PDMS has orders of magnitude lower elastic modulus than its stiff surrounding substrates, $E_{si}/E_{PDMS} \approx 7 \cdot 10^6$ and $E_{Glass}/E_{PDMS} \approx 3 \cdot 10^6$, it follows that it will also experience much higher strains than the stiff layers analogously, to balance the stresses. This effect is even stronger when thinner PDMS interlayers are involved as a result of the overall stiffer composites, hence larger composite deflections and strains occur, when the same load is applied.

Figure 13 depicts insight from static FEM simulations to demonstrate the highly non-affine deformation upon bending for composite structures with various interlayer thicknesses, a) and d) Flexural strain, $\varepsilon_f$, as a function of the applied load. b) and e) maximum transverse shear strain magnification within the PDMS interlayers. c) and f) maximum transverse shear strain magnification at the interfaces between PDMS interlayers and the stiff surrounding layers. The graphs depicted in Figures 13a-13c correspond to the Si/PDMS composite structures and the graphs depicted in Figures 13d-13f to the glass/PDMS composite structures. The properties of the PDMS used in these calculations were G'$_{PDMS}$ = 25 GPa for illustration.

S9. Frequency and temperature scans

We performed frequency and temperature scans with two samples of each kind, one Si/PDMS sample with 300 nm and one with 900 nm PDMS layers, and one glass/PDMS sample with 500 nm and one with 2000 nm PDMS layers. As depicted in Figure 14a, by increasing the temperature from -50 °C to 100 °C the silicon composite structures exhibit only a 25 % change in the modulus, which remains above 76 GPa in the entire examined range of temperatures for the Si/PDMS with 300 nm thick layers, and above 29 GPa for the Si/PDMS with 900 nm thick layers. However, a stronger dependency on the temperature is seen for the glass composite structures (Figure 14b); for both of them the stiffness is reduced almost by half. This is yet another evidence for the substrate-dependent properties of our PDMS layers upon confinement. Figure 14c shows almost a 3-fold decrease in the loss factor with increasing temperature for both samples with different interlayer thicknesses. This is to be expected because of the similar behavior of the bulk PDMS sample (Figure 10), and therefore is attributed to the relaxation of the dangling and free structures inside the 3D network. As described previously, the explanation is the strongly inhomogeneous size distribution of the dangling and free chains and the structures in the 3D network which significantly affect their relaxation spectrum and therefore the dissipation capacity of the PDMS, and as a result also of the composite structure, but has less noticeable effect on its stiffness. Therefore, we see that the loss factor is more affected by the temperature change compared to the stiffness. A similar trend is seen in the case of glass/PDMS (Figure 14d), only, here, the loss factor decreases twice in the measured temperature range for the composite with thinner interlayers and five times for the composite with thicker interlayers. This implies that the properties of the PDMS upon confinement also depend on the thickness. However, as mentioned previously, the process of finding this dependency was not undertaken because of the insufficient data and the unknown exact experimental thickness of the interlayers, which makes it difficult to compare with our simulation results in order to find the right pair of $G'_{PDMS}$ and $\tan\delta_{PDMS}$ that best fits the data (see section S6 above). Nonetheless, the unconventional combinations of stiffness and damping are retained over a quite broad range of temperatures and frequencies; Figure 15 mirrors Figure 14, that is, the results are the same as Figure 14 but with decreasing frequency. This demonstrates that the viscoelastic origin of the composite structures comes from the viscoelastic nature of the elastomer. Therefore, as expected from the temperature-frequency superposition principle, the results in the two figures are almost mirror images. At higher frequencies or lower temperatures, the achieved combinations are even more extraordinary; for the silicon composite structure with 300 nm PDMS thickness (our best sample in terms of stiffness and damping) the modulus is 100 GPa with a loss factor close to 0.15.

Figure 14 depicts temperature scans in our composite structures with two different PDMS interlayer thicknesses. a) Storage modulus, and c) loss factor of silicon composite structures fabricated with 300 nm and 900 nm thin PDMS layers. b) Storage modulus, and d) loss factor of glass composite structures fabricated with 500 nm and 2000 nm thin PDMS layers.

Figure 15 depicts frequency scans in our composite structures with two different PDMS interlayer thicknesses. The graphs mirror those in Figure 14 because of the temperature-frequency superposition principle. Again, a) storage modulus, and c) loss factor of silicon composite structures fabricated with 300 nm and 900 nm thin PDMS layers. b) Storage modulus, and d) loss factor of glass composite structures fabricated with 500 nm and 2000 nm thin PDMS layers.

Figure 16 depicts temperature scans in composite structures according to the invention with two different PDMS interlayer thicknesses, wherein the temperature scans were performed at a frequency of 1 Hz. a) Loss modulus, and c) Square root of the specific modulus - loss factor product of silicon composite structures fabricated with 300 nm thin PDMS layers. b) Loss modulus, and d) Square root of the specific modulus - loss factor product of glass composite structures fabricated with 500 nm thin PDMS layers.

Figure 17 depicts frequency scans in composite structures according to the invention with two different PDMS interlayer thicknesses, wherein the frequency scans were performed at a temperature of 21 °C. The graphs mirror those in Figure 14 because of the temperature-frequency superposition principle. Again, a) loss modulus, and c) Square root of the specific modulus - loss factor product of silicon composite structures fabricated with 300 nm thin PDMS layers. b) Loss modulus, and d) Square root of the specific modulus - loss factor product of glass composite structures fabricated with 500 nm thin PDMS layers.

Hence, the necessity of stiff structural materials with advanced damping characteristics has arisen naturally along with the technological evolution. However, despite ever-growing demand, the achievement of stiff materials with high damping factor remains challenging because of the antagonistic nature of the two properties. Here, this challenge is accomplished by exploiting the non-affine deformation of conventional composite structures paired with the dissipative nature of the viscoelastic phase. Guided by a finite element design analysis, composite structures with flat submillimeter stiff layers and submicron viscoelastic interlayers are fabricated. The viscoelastic component consists of a prudently chemically architectured comb-like polydimethylsiloxane (PDMS) elastomer that properly adheres to the stiff components, strong enough to withstand repeated dynamic cycles. The composite structures are fabricated using an unconventional but simple stacking route based on the diffusion of a platinum catalyst precursor into a reactive solvent-free PDMS melt. The fabricated composite structures exhibit an elastic modulus higher than common monolithic glass, they are as light as glass but have about four orders of magnitude higher loss factor. The composite structures markedly outperform numerous customary materials, they escape the Ashby limit for mechanical damping - stiffness trade-off, and their exceptional combinations of properties are maintained over a broad range of temperatures and frequencies.

<u>References</u>

[1] A. P. Unwin, P. J. Hine, I. M. Ward, M. Fujita, E. Tanaka, A. A. Gusev, Sci. Rep. 2018, 8, 1.
[2] R. Chandra, S. P. Singh, K. Gupta, Compos. Struct. 1999, 46, 41.
[3] X. Zhou, E. Shin, K. W. Wang, C. E. Bakis, Compos. Sci. Technol. 2004, 64, 2425.
[4] W. Woigk, K. Masania, F. Stork, A. Heusi, E. Poloni, A. R. Studart, ACS Appl. Polym. Mater. 2020, 2, 3557.
[5] A. Treviso, B. Van Genechten, D. Mundo, M. Tournour, Compos. Part B Eng. 2015, 78, 144.
[6] P. J. Hine, A. A. Gusev, Int. J. Eng. Sci. 2019, 144, 103133.
[7] W. Woigk, E. Poloni, M. Grossman, F. Bouville, K. Masania, A. R. Studart, Proc. Natl. Acad. Sci. 2022, 119, 1.
[8] C. W. Bert, J. Sound Vib. 1973, 29, 129.
[9] K. Urayama, T. Miki, T. Takigawa, S. Kohjiya, Chem. Mater. 2004, 16, 173.

[10] M. D. Rao, R. Echempati, S. Nadella, Compos. Part B Eng. 1997, 28, 547.

[11] A. Kumar, R. K. Behera, IOP Conf. Ser. Mater. Sci. Eng. 2019, 653, 012036.

[12] B. E. Douglas, J. C. S. Yang, AIAA J. 1978, 16, 925.

[13] O. Sylwan, J. Sound Vib. 1987, 118, 35.

[14] I. C. Tsimouri, W. R. Caseri, A. A. Gusev, Macromolecules 2021, 54, 1589.

[15] W. Caseri, P. S. Pregosin, Organometallics 1988, 7, 1373.

[16] A. Albinati, W. R. Caseri, P. S. Pregosin, Organometallics 1987, 6, 788.

[17] A. Kaliyaraj Selva Kumar, Y. Zhang, D. Li, R. G. Compton, Electrochem. commun. 2020, 121, 106867.

[18] I. C. Tsimouri, F. Schwarz, W. Caseri, P. J. Hine, A. A. Gusev, Macromolecules 2020, 53, 5371.

[19] Y. Nakajima, S. Shimada, RSC Adv. 2015, 5, 20603.

[20] T. Galeandro-Diamant, M. L. Zanota, R. Sayah, L. Veyre, C. Nikitine, C. De Bellefon, S. Marrot, V. Meille, C. Thieuleux, Chem. Commun. 2015, 51, 16194.

[21] A. K. Roy, R. B. Taylor, J. Am. Chem. Soc. 2002, 124, 9510.

[22] Z. Hashin, AIAA J. 1966, 4, 1411.

[23] Y. Gu, J. Zhao, J. A. Johnson, Angew. Chemie - Int. Ed. 2020, 59, 5022.

[24] Y. Gu, J. Zhao, J. A. Johnson, Trends Chem. 2019, 1, 318.

[25] K. Urayama, Polym. J. 2008, 40, 669.

[26] A. M. Stricher, R. G. Rinaldi, C. Barrès, F. Ganachaud, L. Chazeau, RSC Adv. 2015, 5, 53713.

[27] A. M. Baz, Active and Passive Vibration Damping, 2019.

[28] A. Dequidt, D. R. Longa, P. Sotta, O. Sanséau, Eur. Phys. J. E 2012, 35, DOI 10.1140/epje/i2012-12061-6.

[29] C. Batistakis, M. A. J. Michels, A. V. Lyulin, Macromolecules 2014, 47, 4690.

[30] L. Li, N. Alsharif, K. A. Brown, J. Phys. Chem. B 2018, 122, 10767.

[31] W. Xu, N. Chahine, T. Sulchek, Langmuir 2011, 27, 8470.

[32] L. J. Fetters, D. J. Lohse, R. H. Colby, Phys. Prop. Polym. Handb. 2007, 447.

[33] M. Rubinstein, R. H. Colby, Polymer Physics, Oxford University Press: Oxford, 2003.

[34] B. D. Vogt, J. Polym. Sci. Part B Polym. Phys. 2018, 56, 9.

[35] A. P. Unwin, P. J. Hine, I. M. Ward, O. A. Guseva, T. Schweizer, M. Fujita, E. Tanaka, A. A. Gusev, Compos. Sci. Technol. 2017, 142, 302.

[36] ASTM INTERNATIONAL, Annu. B. ASTM Stand. 2002, 1.

LIST OF REFERENCE SIGNS

| | |
|---|---|
| 1 | composite structure |
| 100 | damping structure |
| 2, 2a, | first layer |
| 3, 3a, | second layer |
| 4 | first component |
| 5 | second component |
| D | thickness direction |
| T | transverse direction |
| H | total thickness |
| h1, h1a, | thickness of first layer |
| h2, h2a, | thickness of second layer |

**Claims**

**1.** A composite structure (1) for a damping structure (100), the composite structure (1) comprising:

- at least one first layer (2), and
- at least one second layer (3) preferably comprising at least a first component (4) and optionally at least a second component (5),

wherein the first layer (2) and the second layer (3) are arranged above one another with respect to a thickness direction (D) of the composite structure (1),

**characterized in that** a thickness ratio h1/h2 between a thickness (h1) of the first layer (2) and a thickness (h2) of the second layer (3) along the thickness direction (D) is above 50, preferably above 100, and

**in that** the composite structure (1) has a loss flexural modulus E" above 1 GPa when measured at a temperature in the range of -50 °C to 100 °C and at a frequency in the range of 0.007 Hz to 10 Hz, and **in that** the composite structure (1) has a product $\tan\delta \cdot (E'/\rho)^{1/2}$ above 50 $(Pa/kg/m^3)^{1/2}$ at said temperature and at said frequency,

wherein E' is the storage flexural modulus of the composite structure (1) measured at said temperature and at said frequency,
wherein $\tan\delta = E''/E'$ is the loss factor of the composite structure (1), and
wherein $\rho$ is the density of the composite structure (1).

**2.** The composite structure (1) according to claim 1, wherein the first layer (2) is a stiff layer and/or has a storage flexural modulus E' being above 10 GPa when measured at a temperature in the range of -50 °C to 100 °C and at a frequency in the range of 0.007 Hz to 10 Hz, for instance when measured at a temperature of 20 °C and at a frequency of 1 Hz.

**3.** The composite structure (1) according to any one of the preceding claims, wherein the second layer (3) is a soft layer and/or has, in its bulk form, at least one of:

- a shear modulus G' being below 1 MPa when measured at a temperature in the range of -20 °C to 50 °C and at a frequency in the range of 0.005 Hz to 100 Hz, preferably when measured at a temperature in the range of -10 °C to 30 °C, for instance at 20 °C and at a frequency in the range of 0.01 Hz to 2 Hz, for instance at 1 Hz and/or
- a loss factor $\tan\delta$ being in a range between 0.01 and 1 when measured at a temperature in the range of -20 °C to 50 °C and at a frequency in the range of 0.005 Hz to 100 Hz, preferably when measured at a temperature in the range of -10 °C to 30 °C, for instance at 20 °C and at a frequency in the range of 0.01 Hz to 2 Hz, for instance at 1 Hz.

**4.** The composite structure (1) according to any one of the preceding claims, wherein the first layer (2) comprises or consists of at least one of glass, ceramics, concrete, at least one metal compound, at least one metalloid compound, at least one alloy compound, at least one composite, and mixtures thereof.

**5.** The composite structure (1) according to any one of the preceding claims, wherein the second layer (3) is viscoelastic and/or comprises or consists of:

- at least one elastomer, and/or
- at least one component having a glass-transition temperature being below an operation temperature and/or being below 23 °C, preferably below 0 °C and more preferably below -25 °C, and/or
- at least one of a cross-linkable or cross-linked component, and/or
- at least one polymer, preferably a brush-polymer and more preferably a comb-like polymer network.

**6.** The composite structure (1) according to any one of the preceding claims, comprising two or more first layers (2, 2a, ...) and/or two or more second layers (3, 3a, ...) that are alternatingly arranged with respect to the thickness direction (D) of the composite structure (1).

**7.** The composite structure (1) according to claim 6, wherein a thickness (h1, h1a, ...) of the first layers (2, 2a, ...) are the same or different from one another when seen along the thickness direction (D) of the composite structure (1), and/or wherein a thickness (h2, h2a, ...) of the second layers (3, 3a, ...) are the same of different from one another when seen along the thickness direction (D) of the composite structure (1).

**8.** A damping structure (100) comprising or consisting of at least one composite structure (1) according to any one of the preceding claims.

**9.** A method of producing a composite structure (1), preferably as claimed in any one of claims 1 to 7, the method comprising the steps of:

- Depositing at least one first component (4) on at least one first layer (2), whereby a second layer (3) comprising the at least one first component (4) is formed on the first layer (2).

**10.** The method as claimed in claim 9, wherein, prior to the deposition of the at least one first component (4) on the first layer (2), at least one second component (5) is deposited on the first layer (2), and

wherein the at least one first component (4) is added to the second component (5) being deposited on the first layer (2), whereby the second layer (3) comprising the first component (4) and the second component (5) is formed.

**11.** The method according to claim 9 or 10, wherein:

- the first component (4) is added to the first layer (2), preferably to the second component (5) being deposited on the first layer (2), in a solution comprising the first component (4) and at least one solvent, and wherein said solvent is removed after the solution has been added to the first layer (2), or
- the first component (4) is added to the first layer (2), preferably to the second component (5) being deposited on the first layer (2), in a melt state.

**12.** The method as claimed in any one of claims 10 to 11, wherein the second component (5) is deposited on the first layer (2) by:

- Adding a precursor solution comprising the second component (5) and at least one solvent to the first layer (2); and
- Removing the solvent, whereby the second component (5) is deposited on the first layer (2).

**12.** The method according to claim 10 or 11, wherein the first component (4), prior to being added to the second component (5) being deposited on the first layer (2), is added to at least one further first layer (2a), and wherein the first layer (2) and the further first layer (2a) are arranged above one another such that the first component (4) is arranged between the first layer (2) and the further first layer (2a) with respect to the thickness direction (D) of the composite structure (1), allowing the first component (4) and the second component (5) to intermix.

**13.** The method according to claim 12, wherein the first layer (2) and the further first layer (2a) are pressed against one another.

**14.** The method according to any one of claims 9 to 13, wherein at least one surface of the first layer (2) is pre-treated such as a plasma or corona treatment before receiving the first component (4) and/or the second component (5).

**15.** The method according to any one of claims 9 to 13, wherein the second layer (3) is removed from the first layer (2).

FIG. 1a

FIG. 1b

FIG. 2a

Backbone chains

Hydrosilation

Cross-linking chains

Side chains

Plasma-cleaned silicon oxide

FIG. 2b

**FIG. 3a**

**FIG. 3b**

**FIG. 4a**

**FIG. 4b**

**FIG. 4c**

FIG. 5a

FIG. 5b

FIG. 5c

FIG. 5d

FIG. 6

FIG. 7a

FIG. 7b

FIG. 8a

FIG. 8b

curing

PDMS
rubber

**FIG. 9a**

curing

PDMS
rubber

**FIG. 9b**

**FIG. 9c**

**FIG. 9d**

Expected thickness: 600 nm

**FIG. 9e**

**FIG. 10**

**FIG. 11**

FIG. 12a

FIG. 12b

FIG. 12c

FIG. 12d

flexural strain of the whole composite

FIG. 13a

max shear strain magnification within PDMS

FIG. 13b

## max shear strain @ the interface

**FIG. 13c**

## flexural strain of the whole composite

**FIG. 13d**

**FIG. 13e**

**FIG. 13f**

FIG. 14a

FIG. 14b

FIG. 14c

FIG. 14d

FIG. 15a

FIG. 15b

FIG. 15c

FIG. 15d

**FIG. 16a**

**FIG. 16b**

FIG. 16c

FIG. 16d

**FIG. 17a**

**FIG. 17b**

glass/PDMS_500nm

FIG. 17c

glass/PDMS_500nm

FIG. 17d

## EUROPEAN SEARCH REPORT

**Application Number**

EP 23 21 6822

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TSIMOURI IOANNA CH ET AL: "A simulation-driven design approach to the manufacturing of stiff composites with high viscoelastic damping", COMPOSITES SCIENCE AND TECHNOLOGY, ELSEVIER, AMSTERDAM, NL, vol. 208, 8 March 2021 (2021-03-08), XP086539225, ISSN: 0266-3538, DOI: 10.1016/J.COMPSCITECH.2021.108744 [retrieved on 2021-03-08] * abstract * * figures 1-3 * * Summary & conclusions * ----- | 1-15 | INV.<br>B32B7/022<br>B32B9/04<br>B32B13/04<br>B32B13/12<br>B32B17/10<br>B32B25/20<br>B32B27/28<br>F16F9/30 |
| A | US 2008/248274 A1 (HIERHOLZ KARL-HEINZ [DE]) 9 October 2008 (2008-10-09) * paragraph [0013] - paragraph [0015] * * figure 1 * * claims 1, 8, 17 * ----- | 1-15 | |
| | | | TECHNICAL FIELDS SEARCHED (IPC)<br><br>B32B<br>F16F |

The present search report has been drawn up for all claims

| Place of search | Date of completion of the search | Examiner |
|---|---|---|
| The Hague | 2 May 2024 | Sanchez Perucha, A |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

................................................................

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

**EP 23 21 6822**

This annex lists the patent family members relating to the patent documents cited in the above-mentioned European search report.
The members are as contained in the European Patent Office EDP file on
The European Patent Office is in no way liable for these particulars which are merely given for the purpose of information.

**02-05-2024**

| Patent document cited in search report | Publication date | Patent family member(s) | Publication date |
|---|---|---|---|
| US 2008248274 A1 | 09-10-2008 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. P. BALCH** ; **R. S. LAKES**. *Funct. Mater. Lett.*, 2015, vol. 08, 1550059
- **E. BARAVELLI** ; **M. CARRARA** ; **M. RUZZENE**. Heal. Monit. Struct. Biol. Syst.. 2013, 86952K
- **J. MEAUD** ; **T. SAIN** ; **B. YEOM** ; **S. J. PARK** ; **A. B. SHOULTZ** ; **G. HULBERT** ; **Z. D. MA** ; **N. A. KOTOV** ; **A. J. HART** ; **E. M. ARRUDA**. *ACS Nano*, 2014, vol. 8, 3468
- **I. C. TSIMOURI** ; **S. MONTIBELLER** ; **L. KERN** ; **P. J. HINE** ; **R. SPOLENAK** ; **A. A. GUSEV** ; **S. DANZI**. *Compos. Sci. Technol.*, 2021, vol. 208, 108744
- **A. TREVISO** ; **B. VAN GENECHTEN** ; **D. MUNDO** ; **M. TOURNOUR**. *Compos. Part B Eng.*, 2015, vol. 78, 144
- **W. WOIGK** ; **K. MASANIA** ; **F. STORK** ; **A. HEUSI** ; **E. POLONI** ; **A. R. STUDART**. *ACS Appl. Polym. Mater.*, 2020, vol. 2, 3557
- **W. WOIGK** ; **E. POLONI** ; **M. GROSSMAN** ; **F. BOUVILLE** ; **K. MASANIA** ; **A. R. STUDART**. *Proc. Natl. Acad. Sci.*, 2022, vol. 119, 1
- **A. P. UNWIN** ; **P. J. HINE** ; **I. M. WARD** ; **M. FUJITA** ; **E. TANAKA** ; **A. A. GUSEV**. *Sci. Rep.*, 2018, vol. 8, 1
- **N. NI** ; **Y. WEN** ; **D. HE** ; **X. YI** ; **T. ZHANG** ; **Y. XU**. *Compos. Sci. Technol.*, 2015, vol. 117, 92
- **J. D. ADAMS** ; **B. W. ERICKSON** ; **J. GROSSEN-BACHER** ; **J. BRUGGER** ; **A. NIEVERGELT** ; **G. E. FANTNER**. *Nat. Nanotechnol.*, 2016, vol. 11, 147
- **R. S. LAKES**. *J. Compos. Mater.*, 2002, vol. 36, 287
- **M. BRODT** ; **R. S. LAKES**. *J. Compos. Mater.*, 1995, vol. 29, 1823
- **T. JAGLINSKI** ; **D. KOCHMANN** ; **D. STONE** ; **R. S. LAKES**. *Science*, 2007, vol. 315, 620
- **K. HU** ; **W. CARDENAS** ; **Y. HUANG** ; **H. WEI** ; **R. GASKELL** ; **E. MARTEL** ; **M. CERRUTI** ; **T. SZKOPEK**. *Adv. Funct. Mater.*, 2022, vol. 32, 2107167
- **M. COLLOMS** ; **P. DARLINGTON**. High Performance Loudspeakers: Optimising High Fidelity Loudspeaker Systems. Wiley, 2018
- **D. G. NIELSEN** ; **F. T. AGERKVIST** ; **J. S. JENSEN**. *J. Acoust. Soc. Am.*, 2021, vol. 150, 663
- **Y. F. DUFRÊNE** ; **T. ANDO** ; **R. GARCIA** ; **D. ALSTEENS** ; **D. MARTINEZ-MARTIN** ; **A. ENGEL** ; **C. GERBER** ; **D. J. MÜLLER**. *Nat. Nanotechnol.*, 2017, vol. 12, 295

- **A. A. GUSEV**. *Int. J. Solids Struct.*, 2017, vol. 128, 1
- **J. N. REDDY**. Theory and Analysis of Elastic Plates and Shells. CRC Press, 2006
- **R. M. CHRISTENSEN**. Theory of Viscoelasticity. Elsevier, 1982
- **C. P. CHEN** ; **R. S. LAKES**. *J. Mater. Sci.*, 1993, vol. 28, 4288
- **C. P. CHEN** ; **R. S. LAKES**. *J. Mater. Sci.*, 1993, vol. 28, 4299
- **B. LIU** ; **X. FENG** ; **S. M. ZHANG**. *Compos. Sci. Technol.*, 2009, vol. 69, 2198
- **J. MEAUD** ; **G. M. HULBERT**. *J. Compos. Mater.*, 2013, vol. 47, 3237
- **L. H. SPERLING**. *Sound Vib. Damping with Polym.*, 1990, 5-22
- **B. C. CHAKRABORTY** ; **D. RATNA**. *Polym. Vib. Damping Appl.*, 2020, 143-201
- **J. HUANG** ; **Y. XU** ; **S. QI** ; **J. ZHOU** ; **W. SHI** ; **T. ZHAO** ; **M. LIU**. *Nat. Commun.*, 2021, vol. 12, 3610
- **K. URAYAMA** ; **T. MIKI** ; **T. TAKIGAWA** ; **S. KOHJIYA**. *Chem. Mater.*, 2004, vol. 16, 173
- **K. URAYAMA**. *J. Polym. Sci. Part B Polym. Phys.*, 2006, vol. 44, 3440
- **J. W. KRUMPFER** ; **T. J. MCCARTHY**. *Langmuir*, 2011, vol. 27, 11514
- **L. H. CAI** ; **T. E. KODGER** ; **R. E. GUERRA** ; **A. F. PEGORARO** ; **M. RUBINSTEIN** ; **D. A. WEITZ**. *Adv. Mater.*, 2015, vol. 27, 5132
- **M. VATANKHAH-VARNOSFADERANI** ; **W. F. M. DANIEL** ; **M. H. EVERHART** ; **A. A. PANDYA** ; **H. LIANG** ; **K. MATYJASZEWSKI** ; **A. V. DOBRYNIN** ; **S. S. SHEIKO**. *Nature*, 2017, vol. 549, 497
- **S. S. SHEIKO** ; **A. V. DOBRYNIN**. *Macromolecules*, 2019, vol. 52, 7531
- **H. YAMAZAKI** ; **M. TAKEDA** ; **Y. KOHNO** ; **H. ANDO** ; **K. URAYAMA** ; **T. TAKIGAWA**. *Macromolecules*, 2011, vol. 44, 8829
- **K. URAYAMA** ; **K. YOKOYAMA** ; **S. KOHJIYA**. *Macromolecules*, 2001, vol. 34, 4513
- **H. TEISALA** ; **P. BAUMLI** ; **S. A. L. WEBER** ; **D. VOLLMER** ; **H. J. BUTT**. *Langmuir*, 2020, vol. 36, 4416
- Adhesive Bonding. CRC Press, 2000
- **K. HENTTINEN** ; **T. SUNI**. Handb. Silicon Based MEMS Mater. Technol.. Elsevier, 2015, 591-598

- **G. TOIKKA** ; **G. M. SPINKS** ; **H. R. BROWN**. *J. Adhes.*, 2000, vol. 74, 317
- **D. D. L. CHUNG**. Composite Materials. Springer London, 2003
- **J. L. LENHART** ; **P. J. COLE**. *J. Adhes.*, 2006, vol. 82, 945
- *COMSOL - Software for Multiphysics Simulation*, https://www.comsol.com/, n.d.
- **Y. NAKAJIMA** ; **S. SHIMADA**. *RSC Adv.*, 2015, vol. 5, 20603
- **T. GALEANDRO-DIAMANT** ; **M. L. ZANOTA** ; **R. SAYAH** ; **L. VEYRE** ; **C. NIKITINE** ; **C. DE BELLEFON** ; **S. MARROT** ; **V. MEILLE** ; **C. THIEULEUX**. *Chem. Commun.*, 2015, vol. 51, 16194
- **K. URAYAMA** ; **T. KAWAMURA** ; **S. KOHJIYA**. *Polymer (Guildf).*, 2009, vol. 50, 347
- **V. G. VASILIEV** ; **L. Z. ROGOVINA** ; **G. L. SLONIMSKY**. *Polymer (Guildf)*, 1985, vol. 26, 1667
- **W. CASERI** ; **P. S. PREGOSIN**. *Organometallics*, 1988, vol. 7, 1373
- **S. OMAIREY** ; **N. JAYASREE** ; **M. KAZILAS**. *SN Appl. Sci.*, 2021, vol. 3, 769
- **P. J. STEINBILD** ; **R. HÖHNE** ; **R. FÜßEL** ; **N. MODLER**. *NDT E Int.*, 2019, vol. 102, 114
- **V. G. REYNOLDS** ; **S. MUKHERJEE** ; **R. XIE** ; **A. E. LEVI** ; **A. ATASSI** ; **T. UCHIYAMA** ; **H. WANG** ; **M. L. CHABINYC** ; **C. M. BATES**. *Mater. Horizons*, 2020, vol. 7, 181
- **B. PARK** ; **J. H. SHIN** ; **J. OK** ; **S. PARK** ; **W. JUNG** ; **C. JEONG** ; **S. CHOY** ; **Y. J. JO** ; **T. II KIM**. *Science*, 2022, vol. 376, 624
- **P. E. SCHWEITZER**. Metallic Materials. CRC Press, 2003
- **W. WU** ; **R. XIA** ; **G. QIAN** ; **Z. LIU** ; **J. RAZAVI** ; **F. BERTO** ; **H. GAO**. *Prog. Mater. Sci.*, 2023, vol. 131, 101021
- **W. HUANG** ; **M. SHISHEHBOR** ; **N. GUARIN-ZAPATA** ; **N. D. KIRCHHOFER** ; **J. LI** ; **L. CRUZ** ; **T. WANG** ; **S. BHOWMICK** ; **D. STAUFFER** ; **P. MANIMUNDA**. *Nat. Mater*, 2020, vol. 19, 1236
- **M. O. SAED** ; **W. ELMADIH** ; **A. TERENTJEV** ; **D. CHRONOPOULOS** ; **D. WILLIAMSON** ; **E. M. TERENTJEV**. *Nat. Commun.*, 2021, vol. 12
- **R. CHANDRA** ; **S. P. SINGH** ; **K. GUPTA**. *Compos. Struct*, 1999, vol. 46, 41
- **X. ZHOU** ; **E. SHIN** ; **K. W. WANG** ; **C. E. BAKIS**. *Compos. Sci. Technol*, 2004, vol. 64, 2425
- **P. J. HINE** ; **A. A. GUSEV**. *Int. J. Eng. Sci.*, 2019, vol. 144, 103133
- **C. W. BERT**. *J. Sound Vib.*, 1973, vol. 29, 129
- **M. D. RAO** ; **R. ECHEMPATI** ; **S. NADELLA**. *Compos. Part B Eng.*, 1997, vol. 28, 547
- **A. KUMAR** ; **R. K. BEHERA**. *IOP Conf. Ser. Mater. Sci. Eng.*, 2019, vol. 653, 012036
- **B. E. DOUGLAS** ; **J. C. S. YANG**. *AIAA J*, 1978, vol. 16, 925
- **O. SYLWAN**. *J. Sound Vib.*, 1987, vol. 118, 35
- **I. C. TSIMOURI** ; **W. R. CASERI** ; **A. A. GUSEV**. *Macromolecules*, 2021, vol. 54, 1589
- **A. ALBINATI** ; **W. R. CASERI** ; **P. S. PREGOSIN**. *Organometallics*, 1987, vol. 6, 788
- **A. KALIYARAJ SELVA KUMAR** ; **Y. ZHANG** ; **D. LI** ; **R. G. COMPTON**. *Electrochem. commun.*, 2020, vol. 121, 106867
- **I. C. TSIMOURI** ; **F. SCHWARZ** ; **W. CASERI** ; **P. J. HINE** ; **A. A. GUSEV**. *Macromolecules*, 2020, vol. 53, 5371
- **A. K. ROY** ; **R. B. TAYLOR**. *J. Am. Chem. Soc.*, 2002, vol. 124, 9510
- **Z. HASHIN**. *AIAA J.*, 1966, vol. 4, 1411
- **Y. GU** ; **J. ZHAO** ; **J. A. JOHNSON**. *Angew. Chemie - Int. Ed.*, 2020, vol. 59, 5022
- **Y. GU** ; **J. ZHAO** ; **J. A. JOHNSON**. *Trends Chem.*, 2019, vol. 1, 318
- **K. URAYAMA**. *Polym. J.*, 2008, vol. 40, 669
- **A. M. STRICHER** ; **R. G. RINALDI** ; **C. BARRÈS** ; **F. GANACHAUD** ; **L. CHAZEAU**. *RSC Adv.*, 2015, vol. 5, 53713
- **A. M. BAZ**. *Active and Passive Vibration Damping*, 2019
- **A. DEQUIDT** ; **D. R. LONGA** ; **P. SOTTA** ; **O. SANSÉAU**. *Eur. Phys. J. E*, 2012, vol. 35
- **C. BATISTAKIS** ; **M. A. J. MICHELS** ; **A. V. LYULIN**. *Macromolecules*, 2014, vol. 47, 4690
- **L. LI** ; **N. ALSHARIF** ; **K. A. BROWN**. *J. Phys. Chem. B*, 2018, vol. 122, 10767
- **W. XU** ; **N. CHAHINE** ; **T. SULCHEK**. *Langmuir*, 2011, vol. 27, 8470
- **L. J. FETTERS** ; **D. J. LOHSE** ; **R. H. COLBY**. *Phys. Prop. Polym. Handb.*, 2007, 447
- **M. RUBINSTEIN** ; **R. H. COLBY**. Polymer Physics. Oxford University Press, 2003
- **B. D. VOGT**. *J. Polym. Sci. Part B Polym. Phys.*, 2018, vol. 56, 9
- **A. P. UNWIN** ; **P. J. HINE** ; **I. M. WARD** ; **O. A. GUSEVA** ; **T. SCHWEIZER** ; **M. FUJITA** ; **E. TANAKA** ; **A. A. GUSEV**. *Compos. Sci. Technol.*, 2017, vol. 142, 302
- Annu. B. ASTM Stand.. ASTM INTERNATIONAL, 2002, vol. 1